# EUROPEAN PATENT APPLICATION

(11) **EP 4 794 387 A1**
(43) Date of publication of application: **19.08.2026**
(21) Application number: 24887808.4
(22) Date of filing: 29.10.2024
(51) Int. Cl.: H04W 28/24

(54) **DATA TRANSMISSION METHOD AND APPARATUS, COMMUNICATION DEVICE, AND READABLE STORAGE MEDIUM**

(30) Priority: 10.11.2023 CN 202311498243; 01.03.2024 CN 202410237853
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SUN, Huiqing, Beijing 100032 (CN); HUANG, Zhenglei, Beijing 100032 (CN); LU, Lu, Beijing 100032 (CN); SUN, Tao, Beijing 100032 (CN)
(74) Representative: Patentgruppen A/S
(86) International application number: PCT/CN2024/128099
(87) International publication number: WO 2025/098196

(57) **Abstract**

This disclosure provides a data transmission method and apparatus, communication device, and readable storage medium, and belongs to the field of wireless communication technology. The method includes: a first device receives first information from a first network function, and performs a first operation based on the first information; the first operation includes at least one of: for each protocol data unit (PDU) set or QoS flow, adjusting or deciding on an alternative PDU set Quality of Service (QoS) profile or pattern; for each PDU set or QoS flow, adjusting or deciding on one or more parameters in the alternative PDU set QoS profile or pattern; for one or more QoS flows, adjusting or deciding on an alternative QoS parameter or parameter set related to service information; for one or more QoS flows, adjusting or deciding on an index or level corresponding to the alternative QoS parameter or parameter set related to service information.

## Description

### CROSS-REFERENCE TO RELATED APPLICATION

This application claims priority to Chinese Patent Application No. 202311498243.8 filed in China on November 10, 2023, and to Chinese Patent Application No. 202410237853.0 filed in China on March 1, 2024, disclosures of which are incorporated herein by reference in their entireties.

### TECHNICAL FIELD

This disclosure belongs to the field of wireless communication technology, and in particular relates to a data transmission method and apparatus, communication device, and readable storage medium.

### BACKGROUND

In related art, it is supported to provide a set of alternative Quality of Service (QoS) profiles having priorities to a radio access network (RAN) node. These QoS profiles contain QoS parameters for different QoS levels. When current QoS requirements cannot be met, the RAN node can adjust the QoS level according to the configuration of an alternative QoS profile based on radio resource availability. However, in this scenario, dynamic changes on the service side, such as data burst on the service side, can make it difficult to adapt to service changes by switching to different QoS levels, resulting in ineffective service adaptation.

### SUMMARY

The purpose of this disclosure is to provide a data transmission method and apparatus, a communication device, and a readable storage medium to solve the problem of ineffective service adaptation in related art.

To solve the above-mentioned technical problem, this disclosure is implemented as follows.

In a first aspect, a data transmission method is provided. The method is performed by a first device, and includes:
receiving, by the first device, first information sent by a first network function;
performing, by the first device, a first operation based on the first information; wherein the first operation includes at least one of the following:
   for each protocol data unit set (PDU set), adjusting or deciding on an alternative PDU set Quality of Service (QoS) profiles or patterns;
   for each PDU set, adjusting or deciding on one or more parameters in the alternative PDU set QoS profile or pattern;
   for each QoS flow, adjusting or deciding on the alternative PDU set QoS profile or pattern;
   for one or more QoS flows, adjusting or deciding on an alternative QoS parameter or parameter set related to service information; or
   for one or more QoS flows, adjusting or deciding on an index or level corresponding to the alternative QoS parameter or parameter set related to the service information.

In a second aspect, a data transmission method is provided. The method is performed by a second network function, and includes:
receiving, by the second network function, third information sent by a second device;
generating, by the second network function, first policy information based on the third information;
wherein the third information includes at least one of the following:
   one or more alternative PDU set QoS profiles or patterns;
   one or more indexes or levels corresponding to one or more alternative PDU set QoS profiles or patterns;
   a one-to-one correspondence between alternative PDU set QoS profiles or patterns (or their corresponding indexes or levels) and PSIs;
   a correspondence between multiple alternative PDU set QoS profiles or patterns (or their corresponding indexes or levels) and one PSI;
   instruction to report an adjustment or decision result;
   an alternative QoS parameter or parameter set related to service information;
   an index or level corresponding to the alternative QoS parameter or parameter set related to the service information;
   the service information;
   a correspondence between the alternative QoS parameter or parameter set and the service information;
   a correspondence between the alternative QoS parameter or parameter set related to the service information and the service information; or
   a correspondence between an index or level corresponding to the alternative QoS parameter or parameter set related to the service information and the service information.

In a third aspect, a data transmission method is provided. The method is performed by a first network function, and includes:
receiving, by the first network function, first policy information sent by a second network function;
sending, by the first network function, first information to a first device according to the first policy information;
wherein the first policy information includes at least one of the following:
   one or more alternative PDU set QoS profiles or patterns;
   one or more indexes or levels corresponding to one or more alternative PDU set QoS profiles or patterns;
   a one-to-one correspondence between alternative PDU set QoS profiles or patterns (or their corresponding indexes or levels) and PSIs;
   a correspondence between multiple alternative PDU set QoS profiles or patterns (or their corresponding indexes or levels) and one PSI;
   a second indication, used for instructing the first device to adjust or decide on at least one of the following: PDU set QoS profile or pattern, alternative QoS profile or pattern, or one or more parameters in the alternative PDU set QoS profile or pattern;
   instruction to report an adjustment or decision result;
   one or more alternative QoS parameters or parameter sets related to the service information;
   one or more indexes or levels corresponding to one or more alternative QoS parameters or parameter sets related to the service information;
   a correspondence between the alternative QoS parameter or parameter set and the service information;
   a correspondence between the alternative QoS parameter or parameter set related to the service information and the service information; or
   a correspondence between an index or level corresponding to the alternative QoS parameter or parameter set related to the service information and the service information.

In a fourth aspect, a data transmission method is provided. The method is performed by a second device, and includes:
sending, by the second device, third information to a second network function; wherein the third information includes at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns (or their corresponding indexes or levels) and PSIs;
a correspondence between multiple alternative PDU set QoS profiles or patterns (or their corresponding indexes or levels) and one PSI;
instruction to report an adjustment or decision result;
an alternative QoS parameter or parameter set related to service information;
an index or level corresponding to the alternative QoS parameter or parameter set related to the service information;
the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

In a fourth aspect, a data transmission method is provided. The method is performed by a fourth network function, and includes:
receiving, by the fourth network function, seventh information sent by a first network function;
identifying, classifying and/or mapping, by the fourth network function, a service flow based on the seventh information;
wherein the seventh information includes at least one of the following:
   service information;
   a mapping relationship between the service information and a QoS flow; or
   a mapping relationship between the service information and a priority of the QoS flow.

In a fifth aspect, a data transmission method is provided. The method is performed by a first device, and includes:
receiving, by the first device, fourth information sent by a first network function;
receiving, by the first device, a third indication sent by a fourth network function;
performing, by the first device, a second operation based on the fourth information and the third indication; wherein the second operation includes at least one of the following:
   for each QoS flow, adjusting or deciding on one or more parameters in an alternative QoS profile or pattern;
   for each QoS flow, adjusting or deciding on one or more parameters in an alternative PDU set QoS profile or pattern;
   for each PDU set, adjusting or deciding on one or more parameters in the alternative PDU set QoS profile or pattern;
   reporting an index or level corresponding to an adjusted QoS profile or pattern;
   reporting an index or level corresponding to an adjusted PDU set QoS profile or pattern;
   reporting adjustment or decision result information;
   for one or more QoS flows, adjusting or deciding on an alternative QoS parameter or parameter set; or
   for one or more QoS flows, adjusting or deciding on an alternative QoS parameter or parameter set related to service information.

In a sixth aspect, a data transmission method is provided. The method is performed by a second network function, and includes:
receiving, by the second network function, fifth information sent by a second device;
generating, by the second network function, second policy information based on the fifth information;
wherein the fifth information includes at least one of the following:
   one or more alternative QoS profiles or patterns;
   one or more indexes or levels corresponding to one or more alternative QoS profiles or patterns;
   one or more alternative PDU set QoS profiles or patterns;
   one or more indexes or levels corresponding to one or more alternative PDU set QoS profiles or patterns;
   protocol description information;
   one or more alternative QoS parameters or parameter sets;
   one or more indexes or levels corresponding to one or more alternative QoS parameters or parameter sets;
   one or more alternative QoS parameters or parameter sets related to the service information; or
   one or more indexes or levels corresponding to one or more alternative QoS parameters or parameter sets related to the service information.

In a seventh aspect, a data transmission method is provided. The method is performed by a first network function, and includes:
receiving, by the first network function, second policy information sent by a second network function;
sending, by the first network function, fourth information to a first device according to the second policy information and/or sending, by the first network function, sixth information to a fourth network function according to the second policy information;
wherein the second policy information includes at least one of the following:
   one or more alternative QoS profiles or patterns;
   one or more indexes or levels corresponding to one or more alternative QoS profiles or patterns;
   one or more alternative PDU set QoS profiles or patterns;
   one or more indexes or levels corresponding to one or more alternative PDU set QoS profiles or patterns;
   protocol description information;
   a fifth indication, used for instructing a first device to adjust or decide on at least one of the following: PDU set QoS profile or pattern, alternative QoS profile or pattern, or one or more parameters in the alternative PDU set QoS profile or pattern;
   instruction to report an adjustment or decision result;
   one or more alternative QoS parameters or parameter sets;
   one or more indexes or levels corresponding to one or more alternative QoS parameters or parameter sets;
   one or more alternative QoS parameters or parameter sets related to the service information; or
   one or more indexes or levels corresponding to one or more alternative QoS parameters or parameter sets related to the service information.

In an eighth aspect, a data transmission method is provided. The method is performed by a fourth network function, and includes:
receiving, by the fourth network function, sixth information sent by a first network function; wherein the sixth information includes at least one of the following:
protocol description information; or
instruction to identify and label a data burst.

In a ninth aspect, a data transmission method is provided. The method is performed by a second device, and includes:
sending, by the second device, fifth information to a second network function; wherein the fifth information includes at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

In a tenth aspect, a data transmission method is provided. The method is performed by a first device, and includes:
reporting, by the first device, second information, wherein the second information includes at least one of the following:
a parameter in a QoS profile or pattern;
an index or level corresponding to the QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

In an eleventh aspect, a data transmission method is provided. The method is performed by a fourth network function, and includes:
receiving, by the fourth network function, second information reported by a first device;
generating, by the fourth network function, eighth information based on the second information, and sending, by the fourth network function, the eighth information carried in a header to a third device;
wherein the second information includes at least one of the following:
   a parameter in a QoS profile or pattern;
   a parameter in a PDU set QoS profile or pattern;
   an index or level corresponding to an alternative QoS profile or pattern;
   an index or level corresponding to an alternative PDU set QoS profile or pattern;
   QoS parameters or parameter sets related to service information;
   an alternative QoS parameter or parameter set;
   an index or level corresponding to an alternative QoS parameter or parameter set;
   an alternative QoS parameter or parameter set related to service information; or
   an index or level corresponding to an alternative QoS parameter or parameter set related to the service information;
   wherein the eighth information includes at least one of the following:
      a parameter in a QoS profile or pattern;
      a parameter in a PDU set QoS profile or pattern;
      an index or level corresponding to an alternative QoS profile or pattern;
      an index or level corresponding to an alternative PDU set QoS profile or pattern;
      QoS parameters or parameter sets related to service information;
      an alternative QoS parameter or parameter set;
      an index or level corresponding to an alternative QoS parameter or parameter set;
      an alternative QoS parameter or parameter set related to service information; or
      an index or level corresponding to an alternative QoS parameter or parameter set related to the service information.

In a twelfth aspect, a data transmission method is provided. The method is performed by a third device, and includes:
receiving, by the third device, eighth information sent by a fourth network function, the eighth information including at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

In a thirteenth aspect, a data transmission apparatus is provided. The apparatus is applied to a first device, and includes:
a first receiving module, configured to receive first information sent by a first network function;
a first execution module, configured to perform a first operation based on the first information; wherein the first operation includes at least one of the following:
   for each protocol data unit set (PDU set), adjusting or deciding on an alternative PDU set Quality of Service (QoS) profile or pattern;
   for each PDU set, adjusting or deciding on one or more parameters in the alternative PDU set QoS profile or pattern;
   for each QoS flow, adjusting or deciding on the alternative PDU set QoS profile or pattern;
   for each QoS flow, adjusting or deciding on one or more parameters in the alternative PDU set QoS profile or pattern;
   for one or more QoS flows, adjusting or deciding on an alternative QoS parameter or parameter set related to service information; or
   for one or more QoS flows, adjusting or deciding on an index or level corresponding to the alternative QoS parameter or parameter set related to the service information.

In a fourteenth aspect, a data transmission apparatus is provided. The apparatus is applied to a second network function, and includes:
a second receiving module, configured to receive third information sent by a second device;
a first generating module, configured to generate first policy information based on the third information;
wherein the third information includes at least one of the following:
   one or more alternative PDU set QoS profiles or patterns;
   one or more indexes or levels corresponding to one or more alternative PDU set QoS profiles or patterns;
   a one-to-one correspondence between alternative PDU set QoS profiles or patterns and PSIs;
   a correspondence between multiple alternative PDU set QoS profiles or patterns and one PSI;
   instruction to report an adjustment or decision result;
   an alternative QoS parameter or parameter set related to service information;
   an index or level corresponding to the alternative QoS parameter or parameter set related to the service information;
   the service information;
   a correspondence between the alternative QoS parameter or parameter set and the service information;
   The correspondence between alternative QoS parameters or parameter sets and PDU set information;
   a correspondence between the alternative QoS parameter or parameter set related to the service information and the service information; or
   a correspondence between an index or level corresponding to the alternative QoS parameter or parameter set related to the service information and the service information.

In a fifteenth aspect, a data transmission apparatus is provided. The apparatus is applied to a first network function, and includes:
a third receiving module, configured to receive first policy information sent by a second network function;
a third sending module, configured to send first information to a first device according to the first policy information;
wherein the first policy information includes at least one of the following:
   one or more alternative PDU set QoS profiles or patterns;
   one or more indexes or levels corresponding to one or more alternative PDU set QoS profiles or patterns;
   a one-to-one correspondence between alternative PDU set QoS profiles or patterns and PSIs;
   a correspondence between multiple alternative PDU set QoS profiles or patterns and one PSI;
   a second indication, used for instructing the first device to adjust or decide on at least one of the following: PDU set QoS profile or pattern, alternative QoS profile or pattern, or one or more parameters in the alternative PDU set QoS profile or pattern;
   instruction to report an adjustment or decision result;
   one or more alternative QoS parameters or parameter sets related to the service information;
   one or more indexes or levels corresponding to one or more alternative QoS parameters or parameter sets related to the service information;
   a correspondence between the alternative QoS parameter or parameter set and the service information;
   a correspondence between the alternative QoS parameter or parameter set related to the service information and the service information; or
   a correspondence between an index or level corresponding to the alternative QoS parameter or parameter set related to the service information and the service information.

In a sixteenth aspect, a data transmission apparatus is provided. The apparatus is applied to a second device, and includes:
a fourth sending module, configured to send third information to a second network function; wherein the third information includes at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
instruction to report an adjustment or decision result;
an alternative QoS parameter or parameter set related to service information;
an index or level corresponding to the alternative QoS parameter or parameter set related to the service information;
the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

In a sixteenth aspect, a data transmission apparatus is provided. The apparatus is applied to a fourth network function, and includes:
an eleventh receiving module, configured to receive seventh information sent by a first network function;
a processing module, configured to identify, classify and/or map a service flow based on the seventh information;
wherein the seventh information includes at least one of the following:
   service information;
   a mapping relationship between the service information and a QoS flow; or
   a mapping relationship between the service information and a priority of the QoS flow.

In a seventeenth aspect, a data transmission apparatus is provided. The apparatus is applied to a first device, and includes:
a fourth receiving module, configured to receive fourth information sent by a first network function;
a fifth receiving module, configured to receive a third indication sent by a fourth network function;
a second execution module, configured to perform a second operation based on the fourth information and the third indication; wherein the second operation includes at least one of the following:
   for each QoS flow, adjusting or deciding on one or more parameters in an alternative QoS profile or pattern;
   for each QoS flow, adjusting or deciding on one or more parameters in an alternative PDU set QoS profile or pattern;
   for each PDU set, adjusting or deciding on one or more parameters in the alternative PDU set QoS profile or pattern;
   reporting an index or level corresponding to an adjusted QoS profile or pattern;
   reporting an index or level corresponding to an adjusted PDU set QoS profile or pattern;
   reporting adjustment or decision result information;
   for one or more QoS flows, adjusting or deciding on an alternative QoS parameter or parameter set; or
   for one or more QoS flows, adjusting or deciding on an alternative QoS parameter or parameter set related to service information.

In an eighteenth aspect, a data transmission apparatus is provided. The apparatus is applied to a second network function, and includes:
a sixth receiving module, configured to receive fifth information sent by a second device;
a second generating module, configured to generate second policy information based on the fifth information;
wherein the fifth information includes at least one of the following:
   one or more alternative QoS profiles or patterns;
   one or more indexes or levels corresponding to one or more alternative QoS profiles or patterns;
   one or more alternative PDU set QoS profiles or patterns;
   one or more indexes or levels corresponding to one or more alternative PDU set QoS profiles or patterns;
   protocol description information;
   one or more alternative QoS parameters or parameter sets;
   one or more indexes or levels corresponding to one or more alternative QoS parameters or parameter sets;
   one or more alternative QoS parameters or parameter sets related to the service information; or
   one or more indexes or levels corresponding to one or more alternative QoS parameters or parameter sets related to the service information.

In a nineteenth aspect, a data transmission apparatus is provided. The apparatus is applied to a first network function, and includes:
a seventh receiving module, configured to receive second policy information sent by a second network function;
a sixth sending module, configured to send fourth information to a first device according to the second policy information and/or send sixth information to a fourth network function according to the second policy information;
wherein the second policy information includes at least one of the following:
   one or more alternative QoS profiles or patterns;
   one or more indexes or levels corresponding to one or more alternative QoS profiles or patterns;
   one or more alternative PDU set QoS profiles or patterns;
   one or more indexes or levels corresponding to one or more alternative PDU set QoS profiles or patterns;
   protocol description information;
   a fifth indication, used for instructing a first device to adjust or decide on at least one of the following: PDU set QoS profile or pattern, alternative QoS profile or pattern, or one or more parameters in the alternative PDU set QoS profile or pattern;
   instruction to report an adjustment or decision result;
   one or more alternative QoS parameters or parameter sets;
   one or more indexes or levels corresponding to one or more alternative QoS parameters or parameter sets;
   one or more alternative QoS parameters or parameter sets related to the service information; or
   one or more indexes or levels corresponding to one or more alternative QoS parameters or parameter sets related to the service information.

In a twentieth aspect, a data transmission apparatus is provided. The apparatus is applied to a fourth network function, and includes:
an eighth receiving module, configured to receive sixth information sent by a first network function; wherein the sixth information includes at least one of the following:
protocol description information; or
instruction to identify and label a data burst.

In a twenty-first aspect, a data transmission apparatus is provided. The apparatus is applied to a second device, and includes:
a seventh sending module, configured to send fifth information to a second network function; wherein the fifth information includes at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

In a twenty-second aspect, a data transmission apparatus is provided. The apparatus is applied to a first device, and includes:
a second reporting module, configured to report second information, wherein the second information includes at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

In a twenty-third aspect, a data transmission apparatus is provided. The apparatus is applied to a fourth network function, and includes:
a ninth receiving module, configured to receive second information reported by a first device;
an eighth sending module, configured to generate eighth information based on the second information and send the eighth information carried in a header to a third device;
wherein the second information includes at least one of the following:
   a parameter in a QoS profile or pattern;
   a parameter in a PDU set QoS profile or pattern;
   an index or level corresponding to an alternative QoS profile or pattern;
   an index or level corresponding to an alternative PDU set QoS profile or pattern;
   QoS parameters or parameter sets related to service information;
   an alternative QoS parameter or parameter set;
   an index or level corresponding to an alternative QoS parameter or parameter set;
   an alternative QoS parameter or parameter set related to service information; or
   an index or level corresponding to an alternative QoS parameter or parameter set related to the service information;
   wherein the eighth information includes at least one of the following:
      a parameter in a QoS profile or pattern;
      a parameter in a PDU set QoS profile or pattern;
      an index or level corresponding to an alternative QoS profile or pattern;
      an index or level corresponding to an alternative PDU set QoS profile or pattern;
      QoS parameters or parameter sets related to service information;
      an alternative QoS parameter or parameter set;
      an index or level corresponding to an alternative QoS parameter or parameter set;
      an alternative QoS parameter or parameter set related to service information; or
      an index or level corresponding to an alternative QoS parameter or parameter set related to the service information.

In a twenty-fourth aspect, a data transmission apparatus is provided. The apparatus is applied to a third device, and includes:
a tenth receiving module, configured to receive eighth information sent by a fourth network function, wherein the eighth information includes at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

In a twenty-fifth aspect, a communication device is provided, including a processor, a memory, and a program or instructions stored in the memory and executable on the processor, wherein the program or instructions, when executed by the processor, implement the steps of the method as described in any one of the first to twelfth aspects above.

In a twenty-sixth aspect, a readable storage medium storing a program or instructions is provided, wherein the program or instructions, when executed by a processor, implement the steps of the method as described in any one of the first to twelfth aspects above.

The solutions described in the embodiments of this disclosure can achieve QoS level adjustment at the PDU set granularity or QoS flow granularity, thereby effectively adapting to services. For example, when XR services are concerned, the solutions can effectively adapt to the highly dynamic changes on the XR service side, supporting the network side to dynamically adjust different QoS levels to flexibly adapt to service change requirements.

### BRIEF DESCRIPTION OF THE DRAWINGS

Fig. 1 is a flowchart of a data transmission method according to an embodiment of this disclosure;
Fig. 2 is another flowchart of a data transmission method according to an embodiment of this disclosure;
Fig. 3 is another flowchart of a data transmission method according to an embodiment of this disclosure;
Fig. 4 is another flowchart of a data transmission method according to an embodiment of this disclosure;
Fig. 5A is another flowchart of a data transmission method according to an embodiment of this disclosure;
Fig. 5B is another flowchart of a data transmission method according to an embodiment of this disclosure;
Fig. 6 is another flowchart of a data transmission method according to an embodiment of this disclosure;
Fig. 7 is another flowchart of a data transmission method according to an embodiment of this disclosure;
Fig. 8 is another flowchart of a data transmission method according to an embodiment of this disclosure;
Fig. 9 is another flowchart of a data transmission method according to an embodiment of this disclosure;
Fig. 10 is another flowchart of a data transmission method according to an embodiment of this disclosure;
Fig. 11 is another flowchart of a data transmission method according to an embodiment of this disclosure;
Fig. 12 is another flowchart of a data transmission method according to an embodiment of this disclosure;
Fig. 13 is another flowchart of a data transmission method according to an embodiment of this disclosure;
Fig. 14 is a first schematic diagram of a data transmission process according to an embodiment of this disclosure;
Fig. 15 is a second schematic diagram of a data transmission process according to an embodiment of this disclosure;
Fig. 16A is a third schematic diagram of a data transmission process according to an embodiment of this disclosure;
Fig. 16B is a fourth schematic diagram of a data transmission process according to an embodiment of this disclosure;
Fig. 17 is a schematic structural diagram of a data transmission apparatus according to an embodiment of this disclosure;
Fig. 18 is another schematic structural diagram of a data transmission apparatus according to an embodiment of this disclosure;
Fig. 19 is another schematic structural diagram of a data transmission apparatus according to an embodiment of this disclosure;
Fig. 20A is another schematic structural diagram of a data transmission apparatus according to an embodiment of this disclosure;
Fig. 20B is another schematic structural diagram of a data transmission apparatus according to an embodiment of this disclosure;
Fig. 21 is another schematic structural diagram of a data transmission apparatus according to an embodiment of this disclosure;
Fig. 22 is another schematic structural diagram of a data transmission apparatus according to an embodiment of this disclosure;
Fig. 23 is another schematic structural diagram of a data transmission apparatus according to an embodiment of this disclosure;
Fig. 24 is another schematic structural diagram of a data transmission apparatus according to an embodiment of this disclosure;
Fig. 25 is another schematic structural diagram of a data transmission apparatus according to an embodiment of this disclosure;
Fig. 26 is another schematic structural diagram of a data transmission apparatus according to an embodiment of this disclosure;
Fig. 27 is another schematic structural diagram of a data transmission apparatus according to an embodiment of this disclosure;
Fig. 28 is another schematic structural diagram of a data transmission apparatus according to an embodiment of this disclosure;
Fig. 29 is a schematic structural diagram of a communication device according to an embodiment of this disclosure.

### DETAILED DESCRIPTION

The technical solutions of the embodiments of this disclosure will be clearly and thoroughly described below with reference to the accompanying drawings. Obviously, the described embodiments are only some, not all, of the embodiments of this disclosure. Based on the embodiments of this disclosure, all other embodiments obtained by those skilled in the art without creative effort are within the scope of protection of this disclosure.

Terms "first", "second", etc., used in the description and in the claims are used to distinguish similar objects and not to describe a specific order or sequence. It should be understood that such use of data can be interchanged where appropriate so that embodiments of this disclosure can be implemented in orders other than those illustrated or described herein, and the objects distinguished by "first", "second", etc., are generally of the same type and the number of objects is not limited; for example, there may be one or more first objects. Furthermore, in the specification and claims, "and/or" indicates at least one of the connected objects, and the character "/" generally indicates that the preceding and following objects are in an "or" relationship.

It is worth noting that the technologies described in this disclosure are not limited to Long Term Evolution (LTE)/LTE-A advanced (LTE-A) systems, but can also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency Division Multiple Access (SC-FDMA), and other systems. The terms "system" and "network" in this disclosure are often used interchangeably, and the described technologies can be used not only in the systems and radio technologies mentioned above, but also in other systems and radio technologies, such as New Radio (NR) system, 6th generation (6G) communication system, etc.

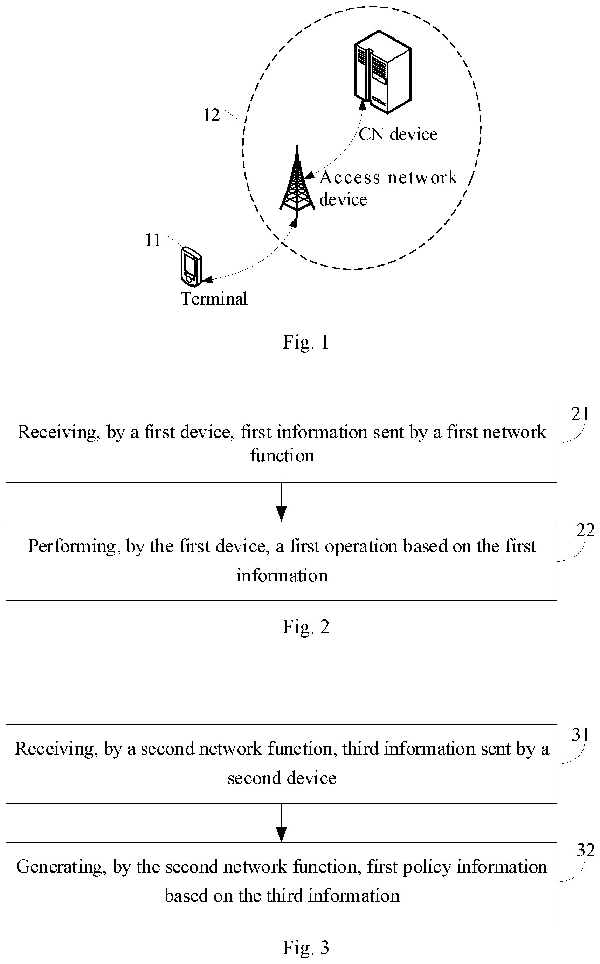

Fig. 1 shows a block diagram of a wireless communication system to which embodiments of this disclosure are applicable. The wireless communication system includes a terminal 11 and a network-side device 12. The terminal 11 can be a mobile phone, tablet computer, laptop computer, notebook computer, personal digital assistant (PDA), handheld computer, netbook, ultra-mobile personal computer (UMPC), mobile internet device (MID), augmented reality (AR), virtual reality (VR) device, robot, wearable device, flight vehicle, vehicle user equipment (VUE), shipboard equipment, pedestrian user equipment (PUE), smart home (home appliances with wireless communication capabilities, such as refrigerators, televisions, washing machines, or furniture), game console, personal computer (PC), ATM, or self-service machine, etc. Wearable devices include: smart watches, smart wriststraps, smart earphones, smart glasses, smart jewelry (smart bracelets, smart chain bracelets, smart rings, smart necklaces, smart anklets, smart chain anklets, etc.), smart wristbands, smart clothing, etc. VUEs can also be referred to as in-vehicle terminals, in-vehicle controllers, in-vehicle modules, in-vehicle components, in-vehicle chips, or in-vehicle units, etc. It should be noted that the specific type of terminal 11 is not limited in the embodiments of this disclosure.

The network-side device 12 may include an access network device or core network device. The access network device 12 may include a base station, WLAN access point, or WiFi node, etc. The base station may be referred to as Node B, Evolved Node B (eNB), access point, Base Transceiver Station (BTS), radio base station, radio transceiver, Basic Service Set (BSS), Extended Service Set (ESS), home B node, home evolved B node, or Transmitting Receiving Point (TRP) or any other suitable term in the field. The base station is not limited to any specific technical term, as long as the same technical effect is achieved. The core network device may include, but is not limited to, at least one of the following: core network node, core network function, Mobility Management Entity (MME), Access and Mobility Management Function (AMF), Session Management Function (SMF), User Plane Function (UPF), Policy Control Function (PCF), Policy and Charging Rules Function (PCRF), Edge Application Server Discovery Function (EASDF), Unified Data Management (UDM), Unified Data Repository (UDR), Home Subscriber Server (HSS), Centralized Network Configuration (CNC), Network Repository Function (NRF), Network Exposure Function (NEF), Binding Support Function (BSF), etc.

Optionally, the solutions in the embodiments of this disclosure can be directed towards Extended Reality (XR) services. XR services can include multimodal data such as audio, video, and haptic feedback. In multimodal terminal device data flow transmission scenarios, these different modal data can be transmitted in multiple service flows and mapped into multiple QoS flows.

To address the issue of ineffective adaptation to services (such as XR services) in related art, this disclosure proposes extending the existing alternative QoS scheme to the alternative protocol data unit set (PDU set) QoS scheme, that is, extending it to the granularity of PDU set. For each QoS flow, AF provides a set of parameters for the alternative PDU set QoS Profile(s) (profile or pattern) or the index or level (reference) corresponding to the PDU set QoS Profile(s).

Optionally, the alternative PDU set QoS can be extended to the PDU set granularity. The AF can provide the correspondence between PDU set Importances (PSIs) and alternative PDU set QoS parameters, where one PSI corresponding to PDU set QoS parameters for one level. When the PCF formulates policies (such as PCC rules), the PCF formulates policies based on the one-to-one correspondence between the PDU set QoS parameters for each level and the PSI, and sends the formulated/generated policies to the SMF. The SMF generates PDU set QoS profiles for multiple levels based on the received policies and sends them to the RAN node. The RAN node can adjust the PDU set QoS level for different PDU sets based on the PSI indications in the header sent by the UPF, for example, adjusting or deciding on one or more parameters in the alternative PDU set QoS profile for each PDU set.

Optionally, the alternative PDU set QoS can be extended to the PDU set granularity. The AF can provide the correspondence between PDU set Importances (PSIs) and alternative PDU set QoS parameters, where each PSI can correspond to PDU set QoS parameters for multiple levels. The RAN can perform multi-level PDU set QoS adjustment on PDU sets according to the PSI indications, for example, adjusting or deciding on one or more parameters in the alternative PDU set QoS profile for each PDU set.

Optionally, the AF can provide protocol description information to the UPF. The protocol description information includes indications about the burst, e.g., the start information of a data burst (such as PDU set start indication) or the end information of the data burst. The UPF can place the protocol description in a header (e.g., GTP-U header) and provide it to the RAN node. The RAN node adjusts the PDU set QoS or QoS level based on the indication about the burst; or, adjusts the QoS of certain PSIs separately based on the received PSI.

In embodiments of the disclosure, it is considered that the service side (such as XR service) supports the alternative PDU set QoS mechanism, and also supports dynamic adjustment of QoS level. The triggering conditions for adjusting the QoS level can be in the following ways.
(1) Based on an indication from a service-side AF:
   - User Plane: A QoS level adjustment indication is added to the data packet header. For example, if the AF needs to adjust the PDU set QoS level based on service requirements, the AF will carry an indication to adjust the PDU set QoS level (e.g., the number of the designated PDU set QoS level placed in the IP packet header, or the start or end identifier of the data burst). The UPF identifies the PDU set information and the data burst information, and sends the corresponding information in the GTP-U header to the RAN to adjust the QoS level. GTP-U refers to the General Packet Radio Service (GPRS) Tunneling Protocol-User Plane.
(2) Based on the radio resource availability on the network side: according to the existing alternative QoS mechanism, when the network resources are insufficient to meet the PDU set QoS requirements, the QoS level is downgraded; or when the resources are sufficient to meet the requirements again, the QoS level is upgraded.
(3) Pre-configured trigger conditions, e.g., those provided by AF:
   - Based on traffic characteristics: based on the periodicity of services and the characteristics of data burst, for example, after receiving an indication about data burst size, it is determined whether a threshold has been exceeded; the RAN can downgrade the QoS level (the action is to adjust the QoS level to a specified level), and then trigger an upgrade when the next indication about data burst arrives.
   - Based on time characteristics: for example, based on the time distribution characteristics of services, the QoS level is adjusted within certain time periods without allocating more resources, which is beneficial for energy saving of network or device; for example, for video-on-demand services, the initial buffering requires large bandwidth after clicking on the playback request button, which has a high QoS requirement, and the QoS level can be reduced subsequently; or upon dragging the progress bar, the bandwidth requirement is large, and the QoS level can be reduced subsequently, e.g., two levels can be provided for adjustment.

Optionally, for the alternative PDU set processing mechanism, the PCF can provide the alternative PDU set QoS parameter information in the PCC Rule to the SMF according to the corresponding parameters of the alternative PDU set QoS provided by the AF; the alternative PDU set QoS Profile(s) generated by the SMF can carry PDU set QoS parameters of different priorities or the indexes/levels (references) corresponding to these parameters.

Optionally, SMF can instruct the RAN to adjust the PDU set QoS index/level.
1) Based on the protocol description provided by the AF, a data burst start or end identifier is added to the protocol description. The SMF can provide the identifier/indication to the UPF. When the UPF sends a downlink message, the UPF identifies the corresponding data burst information and puts the data burst information together with the PDU set information in the GTP-U header and provides it to the RAN. The RAN then adjusts the PDU set QoS level accordingly.
2) Based on the QoS level adjustment indications and triggering conditions provided by the AF (e.g., end of data burst, PDU set importance, data burst size, etc.), the SMF provides the triggering conditions for level changes in alternative PDU set QoS Profile(s) to the RAN. After the RAN detects the corresponding triggering conditions, the RAN autonomously decides to dynamically adjust the PDU set QoS level.

Optionally, if there is no adjustment indication as described above, the RAN may adjust the QoS level in accordance with the conventional alternative QoS adjustment method, e.g., to downgrade the QoS level when the current QoS target cannot be met (e.g., insufficient radio resources).

Optionally, for the network information exposure related to QoS level, if the AF requests the PCF to report QoS satisfaction status, the PCF can configure a QoS notification control indication mechanism in the corresponding PCC rule, to support the reporting of whether the alternative PDU set QoS is satisfied and level changes, and provide a corresponding Policy Control Request Trigger to the SMF, as follows:
- Control plane: When the PDU set QoS level changes on the RAN side, the RAN will notify the SMF of the corresponding change; the SMF can further notify the PCF; the PCF provides the AF with the corresponding PDU set QoS reference, or provides the AF with the corresponding level in the alternative PDU set QoS parameter set;
- User plane: Consider reporting information such as QoS index/level based on the user plane, after reporting thereof to the UPF, the UPF provides the information to the AF.

Optionally, AF can adjust the code rate for the service based on changes in the PDU set QoS level, to better correspond to the QoS level that the RAN side can currently meet, thereby achieving network-service collaboration.

In the embodiment of this disclosure, the alternative can be expressed/understood as: available for selection.

A profile or pattern can be expressed/understood as: profile or profile(s).

A QoS profile or pattern can be expressed/understood as: QoS profile or QoS profile(s).

A PDU set QoS profile or pattern can be expressed/understood as: PDU set QoS profile or PDU set QoS profile(s).

An index or level can be expressed/understood as: reference.

An alternative PDU set QoS profile or pattern can be expressed/understood as: alternative PDU set QoS profile(s).

The alternative QoS profiles or patterns can be expressed/understood as: alternative QoS profile(s).

Optionally, the service information in embodiments of this disclosure may include, but is not limited to, at least one of the following: PDU set information; service characteristics; medium type; medium characteristics; traffic information, etc.

The data transmission method and apparatus, communication device, and readable storage medium provided in embodiments of this disclosure will be described in detail below with reference to the accompanying drawings and through specific embodiments and application scenarios.

Please refer to Fig. 2, which is a flowchart of a data transmission method according to an embodiment of this disclosure. The method is performed by a first device, which may be an RAN node or other device with similar function. As shown in Fig. 2, the method includes the following steps:
Step 21: receiving, by the first device, first information sent by a first network function;
Step 22: performing, by the first device, a first operation based on the first information.

In the embodiment of this disclosure, the first network function may be an SMF or other network function with similar functionality. The first information may include information for a single QoS flow or multiple QoS flows.

Optionally, the first operation may include, but is not limited to, at least one of the following:
for each PDU set, adjusting or deciding on (e.g., determine) the alternative PDU set QoS profile or pattern, i.e., adjust or decide on the alternative PDU set QoS profile(s);
for each PDU set, adjusting or deciding on one or more parameters in the alternative PDU set QoS profile or pattern, i.e., adjust or decide on one or more parameters in the alternative PDU set QoS profile(s);
for each QoS flow, adjusting or deciding on the alternative PDU set QoS profile or pattern;
for each QoS flow, adjusting or deciding on one or more parameters in the alternative PDU set QoS profile or pattern;
for one or more QoS flows, adjusting or deciding on an alternative QoS parameter or parameter set related to service information; or
for one or more QoS flows, adjusting or deciding on an index or level corresponding to the alternative QoS parameter or parameter set related to the service information.

It should be noted that when adjusting or deciding on the alternative QoS parameter or parameter set related to service information for one or more QoS flows, the QoS parameter adjustment for each QoS flow can be: selecting appropriate QoS parameters or QoS parameters related to service information based on the configuration provided by the SMF to the RAN. Adjustment on the RAN side is primarily based on radio resource information and can refer to service information provided by the user plane. In the embodiment of this disclosure, the AF can provide alternative QoS parameters related to service information, and simultaneously provide the service information. When the network performs QoS flow mapping for a service flow and performs QoS parameter configuration according to the AF request, the parameter configuration provided to the RAN is fixed.

Optionally, the service information includes at least one of the following: PDU set information, service characteristics, medium type, medium characteristics, traffic information, etc.

Optionally, the first information may include, but is not limited to, at least one of the following:
one or more alternative PDU set QoS profiles or patterns, i.e., one or more alternative PDU set QoS profile(s);
a one-to-one correspondence between alternative PDU set QoS profiles or patterns and PSIs, i.e., one PSI corresponds to one alternative PDU set QoS profile; this correspondence can also be expressed as: a one-to-one correspondence between the indexes or levels (references) corresponding to the alternative PDU set QoS profiles and the PSIs;
a correspondence between multiple alternative PDU set QoS profiles or patterns and one PSI, i.e., one PSI corresponds to multiple alternative PDU set QoS profiles; this correspondence can also be expressed as: a correspondence between the indexes or levels (references) corresponding to multiple alternative PDU set QoS profiles and a single PSI;
one or more alternative QoS parameters or parameter sets related to PDU set service information;
an index or level corresponding to the alternative QoS parameter or parameter set related to the service information;
a correspondence between the alternative QoS parameter or parameter set and the service information;
a correspondence between the alternative QoS parameter or parameter set related to service information and the service information;
a correspondence between the index or level corresponding to the alternative QoS parameters or parameter sets related to service information and the service information;
a first indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result, the instruction can be used to instruct the first device (such as an RAN node) to report information, e.g., reporting that a parameter in the current QoS profile cannot be met, and/or reporting an index or level corresponding to the adjusted alternative QoS profile; for PDU set QoS, the instruction may also instruct the first device to report that a parameter in the current PDU set QoS profile cannot be satisfied, and/or report an index or level corresponding to the adjusted PDU set QoS profile.

In some embodiments, the first information sent by the SMF to the RAN node may include at least one of the following: one or more alternative PDU set QoS profiles or patterns; a one-to-one correspondence between the alternative PDU set QoS profiles or patterns and PSIs; a correspondence between multiple alternative PDU set QoS profiles or patterns and a single PSI; a first indication; and an instruction to report an adjustment or decision result. In this case, the RAN node may perform adjustments at the PDU set granularity based on the first information, for example, adjusting or deciding on the alternative PDU set QoS profile(s) for each PDU set; or adjusting or deciding on one or more parameters in the alternative PDU set QoS profile(s) for each PDU set.

In other embodiments, the first information sent by the SMF to the RAN node may include at least one of the following: one or more alternative PDU set QoS profiles or patterns; a first indication; an instruction to report an adjustment or decision result; in this case, the RAN node may perform adjustments at the QoS flow granularity based on the first information, for example, adjusting or deciding on the alternative PDU set QoS profile(s) for each QoS flow; or adjusting or deciding on one or more parameters in the alternative PDU set QoS profile(s) for each QoS flow.

It is understood, the solutions in the embodiments of this disclosure can achieve QoS level adjustment at the PDU set granularity or QoS flow granularity, thereby effectively adapting to services. For example, when XR services are concerned, the solutions can effectively adapt to the highly dynamic changes on the XR service side, supporting the network side to dynamically adjust different QoS levels to flexibly adapt to service change requirements.

Optionally, performing the first operation may include:
performing, by the first device, the first operation based on the first information in accordance with a change in at least one of:
radio resource information;
wireless channel information; or
service information, including but not limited to PDU set information, service characteristics, medium type, medium characteristics, traffic information, data packet changes, etc.

In other words, the first device (such as an RAN node) can adjust QoS based on changes in radio resources or radio channel status, according to the first information (such as configuration information provided by the core network to the RAN).

In this way, QoS level adjustments at the PDU set granularity or QoS flow granularity can be performed based on changes in radio resources and/or wireless channel status, enabling multi-level QoS guarantees.

Optionally, the parameters in the alternative PDU set QoS profile or pattern may include, but are not limited to, at least one of the following:
PDU set Delay Budget (PSDB);
PDU set Error Rate (PSER); or
PDU set Integrated Handling Information (PSIHI).

Optionally, the data transmission method according to the embodiment of this disclosure may further include:
in a case that a first condition is met, sending, by the first device, first notification information to the first network function; the first condition includes at least one of the following:
radio resources cannot meet a requirement or cannot meet the requirement again;
the first device determines that the parameter in the PDU set QoS profile or pattern cannot be satisfied or cannot be satisfied again; for example, this parameter can be PSDB or PSER, etc., and the corresponding condition is: the first device determines that the PSDB or PSER in the PDU set QoS profile cannot be satisfied or cannot be satisfied again;
a lowest priority of alternative PDU set QoS profiles or patterns cannot be satisfied, i.e., the lowest priority in the alternative PDU set QoS profile(s) cannot be satisfied;
QoS parameters or parameter sets related to service information cannot be satisfied or cannot be satisfied again; in this case, QoS parameters related to service information may include PSDB parameters and/or PSER parameters, which cannot be satisfied or cannot be satisfied again;
a lowest priority of alternative QoS parameters or parameter sets related to the service information cannot be satisfied.

Optionally, the first notification information may be used to notify at least one of the following:
a parameter in the PDU set QoS profile or pattern cannot be satisfied or cannot be satisfied again; for example, this parameter could be PSDB or PSER, etc;
an index or level corresponding to the alternative PDU set QoS profile or pattern that can be satisfied; for example, this index or level can be: a reference corresponding to the alternative PDU set QoS profile that is currently satisfied;
an index or level corresponding to the lowest priority of the alternative PDU set QoS profiles or patterns cannot be satisfied;
a QoS parameter or parameter set related to service information cannot be satisfied or cannot be satisfied again;
an index or level corresponding to an alternative QoS parameter or parameter set related to the service information that can be satisfied; or
an index or level corresponding to the lowest priority of alternative QoS parameters or parameter sets related to the service information cannot be satisfied.

Optionally, performing the first operation may include:
performing, by the first device, the first operation based on the first information and the service information received from a fourth network function.

For example, the service information is PDU set information. for another example, the service information is the PSI information of each PDU set in the header (such as the GTP-U header) of a received data packet, or the service information in the header of a received data packet. For instance, appropriate alternative QoS parameters related to the service information can be selected based on the service-related information; during the duration of a service flow's transmission in the network, the QoS parameters or PDU set QoS parameters are relatively fixed and do not dynamically change.

Optionally, the PSI information can be the PSI of an I/P/B frame or information about the start frame of a group of pictures (GOP), etc., and there are no restrictions on this.

Optionally, the data transmission method according to the embodiment of this disclosure may further include:
reporting, by the first device, second information, wherein the second information includes, but is not limited to, at least one of the following:
a parameter in a QoS profile or pattern; for example, this parameter can be a parameter in the QoS profile(s) that is currently satisfied or a parameter in an adjusted QoS profile(s);
a parameter in the PDU set QoS profile or pattern; for example, this parameter can be a parameter in the PDU set QoS profile(s) that is currently satisfied or a parameter in the adjusted PDU set QoS profile(s);
an index or level corresponding to an alternative QoS profile or pattern; for example, this index or level can be the index or level corresponding to the alternative QoS profile(s) that is currently satisfied, or the index or level corresponding to the adjusted alternative QoS profile(s);
an index or level corresponding to the alternative PDU set QoS profile or pattern; for example, this index or level can be the index or level corresponding to the alternative PDU set QoS profile(s) that is currently satisfied, or the index or level corresponding to the adjusted alternative PDU set QoS profile(s);
an index or level corresponding to an alternative QoS parameter or parameter set; or
an index or level corresponding to an alternative QoS parameter or parameter set related to the service information.

In this way, by using the reported information, the receiver can obtain information related to the QoS profile(s), which facilitates subsequent data transmission.

Optionally, the first device (such as an RAN node) can send the second information to an application function (AF) or application server (AS) via a UPF. This allows the service side to provide QoS level adjustment indications based on service requirements, while the network side can also expose its adjusted QoS level to the service side, enabling flexible network-service collaboration. This facilitates more precise resource scheduling by the network side based on service characteristics and improves RAN resource utilization efficiency.

Please refer to Fig. 3, which is a flowchart of a data transmission method according to an embodiment of this disclosure. This method is performed by a second network function, which may be a PCF or other network function with similar functionality. As shown in Fig. 3, the method includes the following steps:
Step 31: receiving, by the second network function, third information sent by a second device;
Step 32: generating, by the second network function, first policy information based on the third information.

In the embodiment of this disclosure, the second device may be an AF or other device with similar function.

Optionally, the third information includes, but is not limited to, at least one of the following:
one or more alternative PDU set QoS profiles or patterns, i.e., one or more alternative PDU set QoS profile(s);
one or more indexes or levels corresponding to one or more alternative PDU set QoS profiles or patterns, i.e., one or more references corresponding to one or more alternative PDU set QoS profile(s);
a one-to-one correspondence between alternative PDU set QoS profiles or patterns and PSIs, i.e., one PSI corresponds to one alternative PDU set QoS profile; the correspondence can also be expressed as a one-to-one correspondence between the indexes or levels (references) corresponding to the alternative PDU set QoS profiles and the PSIs;
a correspondence between multiple alternative PDU set QoS profiles or patterns and one PSI, i.e., one PSI corresponds to multiple alternative PDU set QoS profiles; this correspondence can also be expressed as: the correspondence between the indexes or levels (references) corresponding to multiple alternative PDU set QoS profiles and a single PSI;
instruction to report an adjustment or decision result; this instruction can be used to instruct the first device (such as an RAN node) to report information, e.g., reporting that a parameter in the current QoS profile cannot be met, and/or reporting a reference corresponding to the adjusted alternative QoS profile; for PDU set QoS, the instruction may also instruct the first device to report that a parameter in the current PDU set QoS profile cannot be satisfied, and/or report a reference corresponding to the adjusted PDU set QoS profile;
an alternative QoS parameter or parameter set related to service information;
an index or level corresponding to the alternative QoS parameter or parameter set related to the service information;
the service information; optionally, this service information may include medium type, traffic characteristics, etc.; for example, the AF can provide mapping between different medium types and QoS parameters, that is, for each type of service, a matching QoS parameter or alternative QoS parameter is given, or a QoS parameter related to PDU set or an alternative QoS parameter related to PDU set can be given;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

Optionally, the service information includes at least one of the following: PDU set information, service characteristics, medium type, medium characteristics, traffic information, etc.

Optionally, the first policy information includes, but is not limited to, at least one of the following:
one or more alternative PDU set QoS profiles or patterns, i.e., one or more alternative PDU set QoS profile(s);
one or more indexes or levels corresponding to one or more alternative PDU set QoS profiles or patterns, i.e., one or more references corresponding to one or more alternative PDU set QoS profile(s);
a one-to-one correspondence between the alternative PDU set QoS profiles or patterns and PSIs; this correspondence can also be expressed as: a one-to-one correspondence between the indexes or levels (references) corresponding to the alternative PDU set QoS profiles and the PSIs;
a correspondence between multiple alternative PDU set QoS profiles or patterns and one PSI; this correspondence can also be expressed as: a correspondence between the indexes or levels (references) of multiple alternative PDU set QoS profiles and a single PSI;
a second indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result; the instruction can be used to instruct the first device (such as an RAN node) to report information, for example, reporting that a parameter in the current QoS profile cannot be met, and/or reporting a reference corresponding to the adjusted alternative QoS profile, etc.; for PDU set QoS, the instruction may also instruct the first device to report that a parameter in the current PDU set QoS profile cannot be satisfied, and/or report a reference corresponding to the adjusted PDU set QoS profile, etc.;
one or more alternative QoS parameters or parameter sets related to the service information;
one or more indexes or levels corresponding to one or more alternative QoS parameters or parameter sets related to the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

Optionally, the second network function can receive the third information sent by the second device through a third network function. The third network function can be an NEF or other network function with similar functionality. For example, the PCF can receive the third information sent by the AF through the NEF.

Optionally, the data transmission method according to the embodiment of this disclosure may further include:
sending, by the second network function, the first policy information to a first network function. For example, the first network function may be an SMF or other network function with similar functionality. Thus, based on the first policy information, the first network function can send QoS level adjustment information to the first device (such as an AF) based on the received first policy information.

Optionally, the method further includes:
mapping, by the second network function, a service flow to one or more QoS flows based on the third information, wherein the first policy information is applied to the one or more QoS flows.

It is easily understood that the solution in this embodiment can achieve QoS level adjustment at the PDU set granularity or QoS flow granularity, thereby effectively adapting to services.

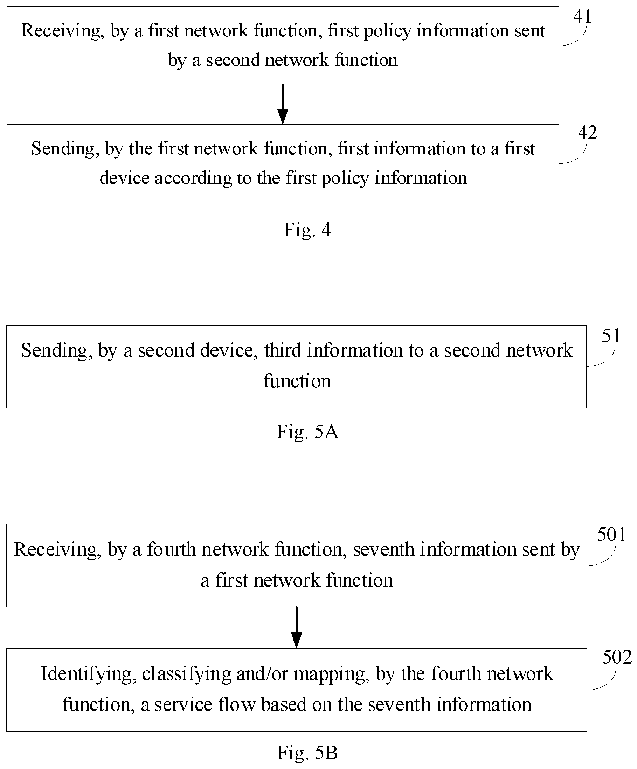

Please refer to Fig. 4, which is a flowchart of a data transmission method according to an embodiment of this disclosure. This method is performed by a first network function, which may be an SMF or other network function with similar functionality. As shown in Fig. 4, the method includes the following steps:
Step 41: receiving, by the first network function, first policy information sent by a second network function;
Step 42: sending, by the first network function, first information to the first device according to the first policy information.

In the embodiment of this disclosure, the second network function may be a PCF or other network function with similar function. The first device may be an RAN node or other device with similar function.

Optionally, the first policy information includes, but is not limited to, at least one of the following:
one or more alternative PDU set QoS profiles or patterns, i.e., one or more alternative PDU set QoS profile(s);
one or more indexes or levels corresponding to one or more alternative PDU set QoS profiles or patterns, i.e., one or more references corresponding to one or more alternative PDU set QoS profile(s);
a one-to-one correspondence between the alternative PDU set QoS profiles or patterns and PSIs; this correspondence can also be expressed as: a one-to-one correspondence between the indexes or levels (references) corresponding to the alternative PDU set QoS profiles and the PSIs;
a correspondence between multiple alternative PDU set QoS profiles or patterns and one PSI; this correspondence can also be expressed as: a correspondence between the indexes or levels (references) of multiple alternative PDU set QoS profiles and a single PSI;
a second indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result; this instruction can be used to instruct the first device (such as an RAN node) to report information, for example, reporting that a parameter in the current QoS profile cannot be met, and/or reporting a reference corresponding to the adjusted alternative QoS profile, etc.; for PDU set QoS, the instruction may also instruct the first device to report that a parameter in the current PDU set QoS profile cannot be satisfied, and/or report a reference corresponding to the adjusted PDU set QoS profile, etc.;
one or more alternative QoS parameters or parameter sets related to the service information;
one or more indexes or levels corresponding to one or more alternative QoS parameters or parameter sets related to the service information;
a correspondence between the alternative QoS parameter or parameter set and the service information;
a correspondence between alternative QoS parameter or parameter set related to service information and the service information; or
a correspondence between an index or level corresponding to the alternative QoS parameter or parameter set related to the service information and the service information.

Optionally, the service information includes at least one of the following: PDU set information, service characteristics, medium type, medium characteristics, traffic information, etc.

Optionally, the first information includes, but is not limited to, at least one of the following:
one or more alternative PDU set QoS profiles or patterns, i.e., one or more alternative PDU set QoS profile(s);
a one-to-one correspondence between alternative PDU set QoS profiles or patterns and PSIs, i.e., one PSI corresponds to one alternative PDU set QoS profile; this correspondence can also be expressed as a one-to-one correspondence between the indexes or levels (references) corresponding to the alternative PDU set QoS profiles and the PSIs;
a correspondence between multiple alternative PDU set QoS profiles or patterns and one PSI, i.e., one PSI corresponds to multiple alternative PDU set QoS profiles; this correspondence can also be expressed as: a correspondence between the indexes or levels (references) corresponding to multiple alternative PDU set QoS profiles and a single PSI;
a first indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result; this instruction can be used to instruct the first device (such as an RAN node) to report information, for example, reporting that a parameter in the current QoS profile cannot be met, and/or an index or level corresponding to the adjusted alternative QoS profile; for PDU set QoS, the instruction may also instruct the first device to report that a parameter in the current PDU set QoS profile cannot be satisfied, and/or report an index or level corresponding to the adjusted PDU set QoS profile, etc.;
one or more alternative QoS parameters or parameter sets related to the service information;
an index or level corresponding to the alternative QoS parameter or parameter set related to the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

Optionally, the first information can be applied to one or more QoS flows.

Optionally, the method further includes:
sending, by the first network function, seventh information to a fourth network function, wherein the seventh information is used for identifying, classifying and/or mapping a service flow; the fourth network function may be a UPF or other network function with similar functions, wherein the seventh information includes at least one of the following:
service information;
a mapping relationship between the service information and a QoS flow; or
a mapping relationship between the service information and a priority of the QoS flow.

It is easily understood that the solution in the embodiment of this disclosure enables the first device (such as an RAN node) to perform QoS level adjustment at the PDU set granularity or QoS flow granularity based on the received first information, thereby achieving the effect of effectively adapting to the service.

Please refer to Fig. 5A, which is a flowchart of a data transmission method according to an embodiment of this disclosure. The method is performed by a second device, which may be an AF or other device with similar functionality. As shown in Fig. 5A, the method includes the following steps:
Step 51: sending, by the second device, third information to a second network function.

In the embodiment of this disclosure, the second network function may be a PCF or other network function with similar function.

Optionally, the third information includes, but is not limited to, at least one of the following:
one or more alternative PDU set QoS profiles or patterns, i.e., one or more alternative PDU set QoS profile(s);
one or more indexes or levels corresponding to one or more alternative PDU set QoS profiles or patterns, i.e., one or more references corresponding to one or more alternative PDU set QoS profile(s);
a one-to-one correspondence between alternative PDU set QoS profiles or patterns and the PSIs, i.e., one PSI corresponds to one alternative PDU set QoS profile; this correspondence can also be expressed as a one-to-one correspondence between the indexes or levels (references) corresponding to the alternative PDU set QoS profiles and the PSIs;
a correspondence between multiple alternative PDU set QoS profiles or patterns and one PSI, i.e., one PSI corresponds to multiple alternative PDU set QoS profiles; this correspondence can also be expressed as: a correspondence between the indexes or levels (references) corresponding to multiple alternative PDU set QoS profiles and a single PSI;
instruction to report an adjustment or decision result; this instruction can be used to instruct the first device (such as an RAN node) to report information, for example, reporting that a parameter in the current QoS profile cannot be met, and/or reporting a reference corresponding to the adjusted alternative QoS profile, etc.; for PDU set QoS, the instruction may also instruct the first device to report that a parameter in the current PDU set QoS profile cannot be satisfied, and/or report a reference corresponding to the adjusted PDU set QoS profile, etc.;
an alternative QoS parameter or parameter set related to service information;
an index or level corresponding to the alternative QoS parameter or parameter set related to the service information;
the service information;
a correspondence between the alternative QoS parameter or parameter set and the service information;
a correspondence between alternative QoS parameters or parameter sets related to service information and the service information; or
a correspondence between an index or level corresponding to the alternative QoS parameter or parameter set related to the service information and the service information.

Optionally, the service information includes at least one of the following: PDU set information, service characteristics, medium type, medium characteristics, traffic information, etc.

Optionally, the second device sends the third information to the second network function via a third network function. The third network function can be an NEF or other network function with similar functionality. For example, the AF can send the third information to the PCF via an NEF.

It is easily understood that the solution in this embodiment can achieve QoS level adjustment at the PDU set granularity or QoS flow granularity, thereby effectively adapting to services.

Please refer to Fig. 5B, which is a flowchart of a data transmission method according to an embodiment of this disclosure. This method is performed by a fourth network function, which may be a UPF or other network function with similar functionality. As shown in Fig. 5B, the method includes the following steps:
Step 501: receiving, by the fourth network function, seventh information sent by a first network function;
Step 502: identifying, classifying and/or mapping, by the fourth network function, a service flow based on the seventh information; wherein the seventh information includes at least one of the following:
   service information;
   a mapping relationship between the service information and a QoS flow; or
   a mapping relationship between the service information and a priority of the QoS flow.

Optionally, the service information includes at least one of the following: PDU set information, service characteristics, medium type, medium characteristics, traffic information, etc.

Optionally, the method further includes:
sending, by the fourth network function, the service information to a first device based on the identification, classification, and/or mapping of the service flow, wherein the service information is applied to one or more QoS flows.

It should be noted that the embodiments described in Figs. 2, 3, 4, 5A and 5B above are, in general, interactions between core network functions, RAN and AF, to achieve QoS level adjustment at the PDU set granularity or QoS flow granularity.

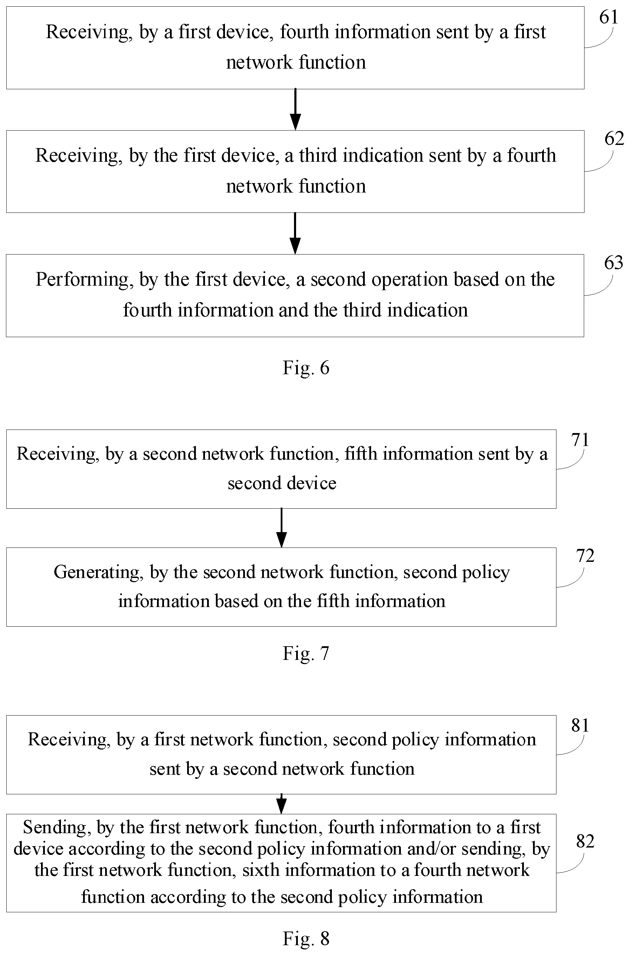

Please refer to Fig. 6, which is a flowchart of a data transmission method according to an embodiment of this disclosure. The method is performed by a first device, which may be an RAN node or other device with similar function. As shown in Fig. 6, the method includes the following steps:
Step 61: receiving, by the first device, fourth information sent by a first network function;
Step 62: receiving, by the first device, a third indication sent by the fourth network function;
Step 63: performing, by the first device, a second operation based on the fourth information and the third indication.

In the embodiment of this disclosure, the first network function may be an SMF or other network function with similar functions. The fourth network function may be a UPF or other network function with similar functions.

Optionally, the second operation may include, but is not limited to, at least one of the following:
for each QoS flow, adjusting or deciding on (e.g., determining) one or more parameters in the alternative QoS profiles or patterns, i.e., adjust or decide on one or more parameters in the alternative QoS profile(s);
for each QoS flow, adjusting or deciding on one or more parameters in the alternative PDU set QoS profiles or patterns, i.e., adjust or decide on one or more parameters in the alternative PDU set QoS profile(s);
for each PDU set, adjusting or deciding on one or more parameters in the alternative PDU set QoS profiles or patterns, i.e., adjust or decide on one or more parameters in the alternative PDU set QoS profile(s);
reporting an index or level (reference) corresponding to the adjusted QoS profile or pattern.
reporting an index or level corresponding to an adjusted PDU set QoS profile or pattern;
reporting adjustment or decision result information;
for one or more QoS flows, adjusting or deciding on an alternative QoS parameter or parameter set; or
for one or more QoS flows, adjusting or deciding on an alternative QoS parameter or parameter set related to service information.

Optionally, the service information includes at least one of the following: PDU set information, service characteristics, medium type, medium characteristics, traffic information, etc.

It is understood, the solutions in the embodiments of this disclosure can achieve QoS level adjustment at the PDU set granularity or QoS flow granularity, thereby effectively adapting to services. For example, when XR services are concerned, the solutions can effectively adapt to the highly dynamic changes on the XR service side, supporting the network side to dynamically adjust different QoS levels to flexibly adapt to service change requirements.

Optionally, the fourth information includes, but is not limited to, at least one of the following:
alternative QoS profiles or patterns, i.e., alternative QoS profile(s);
alternative PDU set QoS profiles or patterns, i.e., alternative PDU set QoS profile(s);
a fourth indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result, this instruction can be used to instruct the first device (such as an RAN node) to report information, for example, reporting that a parameter in the current QoS profile cannot be met, and/or reporting an index or level corresponding to the adjusted alternative QoS profile, etc.; for PDU set QoS, the instruction may also instruct the first device to report that a parameter in the current PDU set QoS profile cannot be satisfied, and/or report an index or level corresponding to the adjusted PDU set QoS profile, etc.;
an alternative QoS parameter or parameter set related to service information.

Optionally, the third indication is an indication contained in the header (such as the GTP-U header) of a data packet sent by the fourth network function (such as UPF), and includes at least one of the following:
start information of a data burst, e.g., start identifier or a size of the data burst;
end information of a data burst, e.g., end identifier; or
a duration of the data burst.

Optionally, the parameter in the alternative PDU set QoS profile or pattern may include, but are not limited to, at least one of the following:
PDU set delay budget (PSDB);
PDU set error rate (PSER); or
PDU set integrated handling information (PSIHI).

It should be noted that the embodiments described in Figs. 2 and 6 above can be combined to form a scheme implemented by a first device (such as an RAN node).

Please refer to Fig. 7, which is a flowchart of a data transmission method according to an embodiment of this disclosure. This method is performed by a second network function, which may be a PCF or other network function with similar functionality. As shown in Fig. 7, the method includes the following steps:
Step 71: receiving, by the second network function, fifth information sent by a second device;
Step 72: generating, by the second network function, second policy information based on the fifth information.

In the embodiment of this disclosure, the second device may be an AF or other device with similar function.

Optionally, the fifth information includes, but is not limited to, at least one of the following:
one or more alternative QoS profiles or patterns, i.e., one or more alternative QoS profile(s);
one or more indexes or levels corresponding to one or more alternative QoS profiles or patterns, i.e., one or more references corresponding to one or more alternative QoS profiles;
one or more alternative PDU set QoS profiles or patterns; that is, one or more alternative PDU set QoS profile(s);
one or more indexes or levels corresponding to one or more alternative PDU set QoS profiles or patterns, i.e., one or more references corresponding to one or more alternative PDU set QoS profile(s);
protocol description;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

Optionally, the protocol description information includes at least one of the following:
start information of a data burst, e.g., start identifier, or a size of the data burst;
end information of a data burst, e.g., end identifier; or
a duration of the data burst.

Optionally, the second policy information includes at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information, such as start and/or end information of a data burst;
a fifth indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result; this instruction can be used to instruct the first device (such as an RAN node) to report information, for example, reporting that a parameter in the current QoS profile cannot be met, and/or reporting a reference corresponding to the adjusted alternative QoS profile, etc.; for PDU set QoS, the instruction may also instruct the first device to report that a parameter in the current PDU set QoS profile cannot be satisfied, and/or report a reference corresponding to the adjusted PDU set QoS profile, etc.;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

Optionally, the service information includes at least one of the following: PDU set information, service characteristics, medium type, medium characteristics, traffic information, etc.

Optionally, the data transmission method according to the embodiment of this disclosure may further include:
sending, by the second network function, the second policy information to a first network function. For example, the first network function may be an SMF or other network function with similar functionality. Thus, based on the second policy information, the first network function can send QoS level adjustment information to the first device (such as an AF) based on the received second policy information.

It is easily understood that the solution in this embodiment can achieve QoS level adjustment at the PDU set granularity or QoS flow granularity, thereby effectively adapting to services.

It should be noted that the embodiments described in Figs. 3 and 7 above can be combined to form a scheme implemented by a second network function (such as PCF).

Please refer to Fig. 8, which is a flowchart of a data transmission method according to an embodiment of this disclosure. The method is performed by a first network function, which may be an SMF or other network function with similar functionality. As shown in Fig. 8, the method includes the following steps:
Step 81: receiving, by the first network function, second policy information sent by a second network function;
Step 82: sending, by the first network function, fourth information to a first device according to the second policy information and/or sending, by the first network function, sixth information to a fourth network function according to the second policy information.

In the embodiment of this disclosure, the second network function may be a PCF or other network function with similar function. The first device may be an RAN node or other device with similar function. The fourth network function may be a UPF or other network function with similar function.

Optionally, the second policy information includes, but is not limited to, at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information, e.g., start and/or end information of a data burst; or
a fifth indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result, this instruction can be used to instruct the first device (such as an RAN node) to report information, for example, reporting that a parameter in the current QoS profile cannot be met, and/or reporting a reference corresponding to the adjusted alternative QoS profile, etc.; for PDU set QoS, the instruction may also instruct the first device to report that a parameter in the current PDU set QoS profile cannot be satisfied, and/or report a reference corresponding to the adjusted PDU set QoS profile, etc.;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

Optionally, the service information includes at least one of the following: PDU set information, service characteristics, medium type, medium characteristics, traffic information, etc.

Optionally, the sixth information includes, but is not limited to, at least one of the following:
protocol description information, e.g., start and/or end information of a data burst; or
data burst identification and labeling indication, which can be used to indicate to identify and label a data burst.

Optionally, the fourth information includes, but is not limited to, at least one of the following:
alternative QoS profiles or patterns, i.e., alternative QoS profile(s);
alternative PDU set QoS profiles or patterns, i.e., alternative PDU set QoS profile(s);
a fourth indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result; this instruction can be used to instruct the first device (such as an RAN node) to report information, for example, reporting that a parameter in the current QoS profile cannot be met, and/or reporting an index or level corresponding to the adjusted alternative QoS profile, etc.; for PDU set QoS, the instruction may also instruct the first device to report that a parameter in the current PDU set QoS profile cannot be satisfied, and/or report an index or level corresponding to the adjusted PDU set QoS profile, etc.;
an alternative QoS parameter or parameter set;
an alternative QoS parameter or parameter set related to service information.

It is easily understood that the solution in the embodiment of this disclosure enables the first device (such as an RAN node) to perform QoS level adjustment at the PDU set granularity or QoS flow granularity based on the received fourth information, thereby achieving the effect of effectively adapting to services.

It should be noted that the embodiments described in Figs. 4 and 8 above can be combined to form a scheme implemented by a first network function (such as SMF).

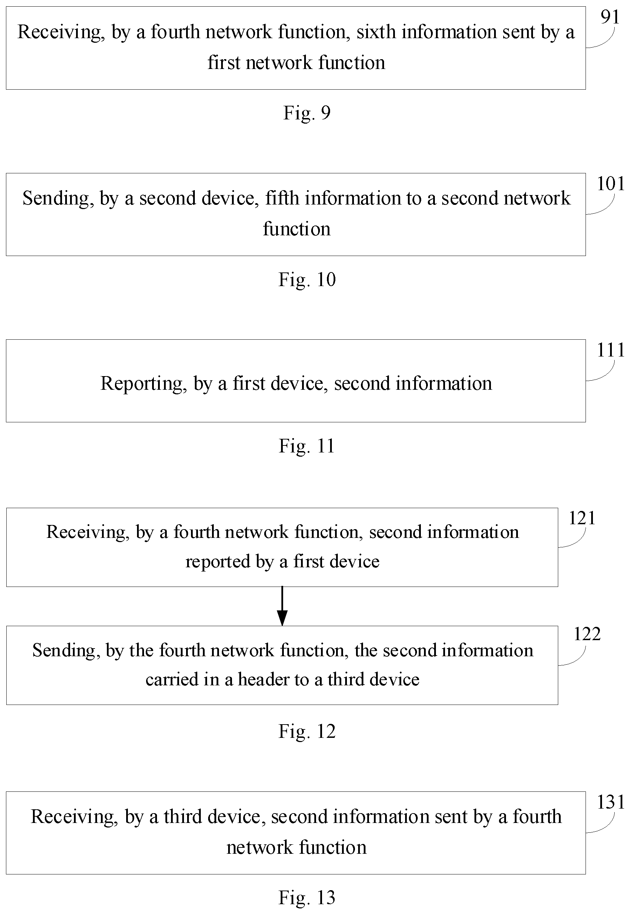

Please refer to Fig. 9, which is a flowchart of a data transmission method according to an embodiment of this disclosure. This method is performed by a fourth network function, which may be a UPF or other network function with similar functionality. As shown in Fig. 9, the method includes the following steps:
Step 91: receiving, by the fourth network function, sixth information sent by a first network function.

In the embodiment of this disclosure, the first network function may be an SMF or other network function with similar function. The sixth information includes, but is not limited to, at least one of the following:
protocol description information, e.g., start and/or end information of a data burst; or
data burst identification and labeling indication, which can be used to indicate to identify and label a data burst.

Optionally, the fourth network function can identify and label a data burst, place at least one of the following information about the data burst in the header of the data packet: start information of the data burst, end information of the data burst, or a duration of the data burst, and send the data packet to the first device through the user plane to assist the first device in performing QoS level adjustment.

Please refer to Fig. 10, which is a flowchart of a data transmission method according to an embodiment of this disclosure. This method is performed by a second device, which may be an AF or other device with similar functionality. As shown in Fig. 10, the method includes the following step:
Step 101: sending, by the second device, fifth information to a second network function.

In the embodiment of this disclosure, the second network function may be a PCF or other network function with similar function.

Optionally, the fifth information includes, but is not limited to, at least one of the following:
one or more alternative QoS profiles or patterns, i.e., one or more alternative QoS profile(s);
one or more indexes or levels corresponding to one or more alternative QoS profiles or patterns, i.e., one or more references corresponding to one or more alternative QoS profiles;
one or more alternative PDU set QoS profiles or patterns; that is, one or more alternative PDU set QoS profile(s);
one or more indexes or levels corresponding to one or more alternative PDU set QoS profiles or patterns, i.e., one or more references corresponding to one or more alternative PDU set QoS profile(s);
protocol description;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

Optionally, the protocol description information includes at least one of the following:
start information of a data burst, e.g., start identifier, or a size of the data burst;
end information of a data burst, e.g., end identifier; or
a duration of the data burst.

Optionally, the service information includes at least one of the following: PDU set information, service characteristics, medium type, medium characteristics, traffic information, etc.

Optionally, the second device sends the fifth information to the second network function via a third network function. The third network function can be NEF or other network function with similar functionality. For example, the AF can send the fifth information to the PCF via the NEF.

It is easily understood that the solution in this embodiment can achieve QoS level adjustment at the PDU set granularity or QoS flow granularity, thereby effectively adapting to services.

It should be noted that the embodiments described in Figs. 5A and 10 above can be combined to form a solution implemented by a second device (such as AF).

The embodiments described in Figs. 6, 7, 8, 9 and 10 above are, in general, interactions between core network functions, RAN and AF, to achieve QoS level adjustment at the PDU set granularity or QoS flow granularity.

Please refer to Fig. 11, which is a flowchart of a data transmission method according to an embodiment of this disclosure. The method is performed by a first device, which may be an RAN node or other device with similar function. As shown in Fig. 11, the method includes the following step:
Step 111: reporting, by the first device, second information.

In the embodiment of this disclosure, the second information includes at least one of the following.

Optionally, the second information includes, but is not limited to, at least one of the following:
a parameter in a QoS profile or pattern; for example, this parameter can be a parameter in QoS profile(s) that is satisfied or a parameter in the adjusted QoS profile(s);
a parameter in the PDU set QoS profile or pattern; for example, this parameter can be a parameter in PDU set QoS profile(s) that is satisfied or a parameter in the adjusted PDU set QoS profile(s);
an index or level corresponding to an alternative QoS profile or pattern; for example, this index or level can be the index or level corresponding to the alternative QoS profile(s) that is satisfied, or the index or level corresponding to the adjusted alternative QoS profile(s);
an index or level corresponding to an alternative PDU set QoS profile or pattern; for example, this index or level can be the index or level corresponding to alternative PDU set QoS profile(s) that is satisfied, or the index or level corresponding to the adjusted alternative PDU set QoS profile(s);
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

Optionally, the service information includes at least one of the following: PDU set information, service characteristics, medium type, medium characteristics, traffic information, etc.

In this way, by using the reported information, the receiver can obtain information related to the QoS profile(s), which facilitates subsequent data transmission.

Optionally, the first device sends the second information to the third device via a fourth network function. The fourth network function can be a UPF or other network function with similar functionality, and the third device can be an AF, AS, or other device with similar functionality. For example, the RAN node can send the second information to the AF or AS via the UPF.

It should be noted that this embodiment can be combined with the embodiments described in Figs. 2 and 6 above to form a scheme implemented by a first device (such as an RAN node).

Please refer to Fig. 12, which is a flowchart of a data transmission method according to an embodiment of this disclosure. This method is performed by a fourth network function, which may be a UPF or other network function with similar functionality. As shown in Fig. 12, the method includes the following steps:
Step 121: receiving, by the fourth network function, second information reported by a first device;
Step 122: generating, by the fourth network function, eighth information based on the second information, and sending, by the fourth network function, the eighth information carried in a header to a third device.

In the embodiment of this disclosure, the first device may be an RAN node or other device with similar function. The third device may be an AF, AS, or other device with similar function. The second information may be the same or different.

Optionally, the second information includes, but is not limited to, at least one of the following:
a parameter in a QoS profile or pattern; for example, this parameter can be a parameter in the QoS profile(s) that is satisfied or a parameter in the adjusted QoS profile(s);
a parameter in the PDU set QoS profile or pattern; for example, this parameter can be a parameter in the PDU set QoS profile(s) that is satisfied or a parameter in the adjusted PDU set QoS profile(s);
an index or level corresponding to an alternative QoS profile or pattern; for example, this index or level could be the index or level corresponding to the alternative QoS profile(s) that is satisfied, or the index or level corresponding to the adjusted alternative QoS profile(s);
an index or level corresponding to the alternative PDU set QoS profile or pattern; for example, this index or level can be the index or level corresponding to alternative PDU set QoS profile(s) that is satisfied, or the index or level corresponding to the adjusted alternative PDU set QoS profile(s);
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.
wherein the eighth information includes at least one of the following:
   a parameter in a QoS profile or pattern;
   a parameter in a PDU set QoS profile or pattern;
   an index or level corresponding to an alternative QoS profile or pattern;
   an index or level corresponding to an alternative PDU set QoS profile or pattern;
   QoS parameters or parameter sets related to service information;
   an alternative QoS parameter or parameter set;
   an index or level corresponding to an alternative QoS parameter or parameter set;
   an alternative QoS parameter or parameter set related to service information; or
   an index or level corresponding to an alternative QoS parameter or parameter set related to the service information.

Optionally, the service information includes at least one of the following: PDU set information, service characteristics, medium type, medium characteristics, traffic information, etc.

Optionally, sending the eighth information carried in a header to the third device includes:
sending, by the fourth network function, the eighth information to the third device based on mapping information provided by a first network function, wherein the mapping information includes at least one of the following:
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

In this way, by using the reported information, the receiver can obtain information related to the QoS profile(s), which facilitates subsequent data transmission.

It should be noted that this embodiment can be combined with the embodiment described in Fig. 9 above to form a scheme implemented by a fourth network function (such as UPF).

Please refer to Fig. 13, which is a flowchart of a data transmission method according to an embodiment of this disclosure. This method is performed by a third device, which may be an AF, AS, or other device with similar function. As shown in Fig. 13, the method includes the following step:
Step 131: receiving, by the third device, eighth information sent by a fourth network function.

In the embodiment of this disclosure, the fourth network function may be a UPF or other network function with similar function.

Optionally, the eighth information includes, but is not limited to, at least one of the following:
a parameter in a QoS profile or pattern; for example, this parameter can be a parameter in the QoS profile(s) that is satisfied or a parameter in the adjusted QoS profile(s);
a parameter in the PDU set QoS profile or pattern; for example, this parameter can be a parameter in the PDU set QoS profile(s) that is satisfied or a parameter in the adjusted PDU set QoS profile(s);
an index or level corresponding to an alternative QoS profile or pattern; for example, this index or level can be the index or level corresponding to the alternative QoS profile(s) that is satisfied, or the index or level corresponding to the adjusted alternative QoS profile(s);
an index or level corresponding to an alternative PDU set QoS profile or pattern; for example, this index or level can be the index or level corresponding to alternative PDU set QoS profile(s) that is satisfied, or the index or level corresponding to the adjusted alternative PDU set QoS profile(s);
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

Optionally, the service information includes at least one of the following: PDU set information, service characteristics, medium type, medium characteristics, traffic information, etc.

It should be noted that the embodiments described in Figs. 11, 12 and 13 above are, in general, an information exposure process to realize the reporting of the second information.

The present disclosure will now be described in conjunction with specific embodiments.

### Example 1

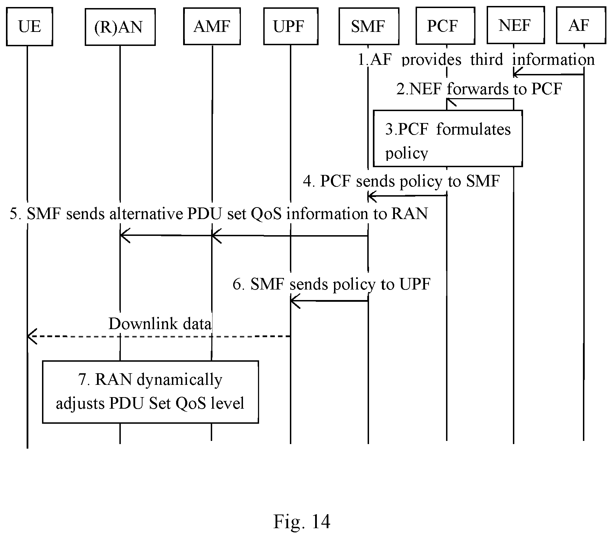

In this example 1, the core network receives the alternative PDU set QoS information provided by the AF, formulates corresponding policies, and implements corresponding configurations. As shown in Fig. 14, the specific data transmission process may include the following steps.

Step 1: The AF requests support for alternative PDU set QoS, and sends third information to the NEF in the Alternative Service Requirements. Optionally, the third information includes at least one of the following: one or more alternative PDU set QoS profile(s); one or more references corresponding to one or more alternative PDU set QoS profile(s); a one-to-one correspondence between alternative PDU set QoS profiles and PSIs; a correspondence between multiple alternative PDU set QoS profiles and a single PSI; and an instruction for reporting the adjustment or decision result.

Step 2: NEF forwards the third information to the PCF.

Step 3: The PCF makes a decision based on the third information and generates first policy information, which may include at least one of the following: one or more alternative PDU set QoS profile(s); one or more references corresponding to one or more alternative PDU set QoS profile(s); a one-to-one correspondence between alternative PDU set QoS profiles and PSIs; a correspondence between multiple alternative PDU set QoS profiles and a single PSI; and an instruction for reporting the adjustment or decision result.

Step 4: The PCF sends the first policy information to the SMF.

Step 5: The SMF generates first information based on the first policy information, and sends the first information to the RAN to instruct the RAN to dynamically adjust the PDU set QoS level; wherein, the first information may include at least one of the following: one or more alternative PDU set QoS profile(s); a one-to-one correspondence between alternative PDU set QoS profiles and PSIs; a correspondence between multiple alternative PDU set QoS profiles and a single PSI; an instruction to report an adjustment or decision result, etc.

Step 6: The SMF sends the policy to the UPF, indicating the protocol description information, as well as the PDU set information identifier, data burst start or end information, etc.

Step 7: Based on the received first information, the RAN performs at least one of the following: for each PDU set or QoS flow, adjust or decide on the alternative PDU set QoS profile(s); for each PDU set or QoS flow, adjust or decide on the reference corresponding to the alternative PDU set QoS profile(s).

### Example 2

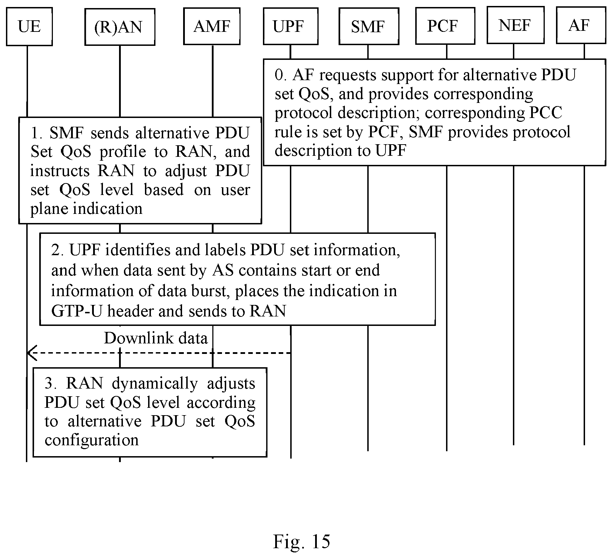

In this example 2, the AF adjusts, via the user plane, the PDU set QoS level based on service conditions and as per the indication in the data packet. As shown in Fig. 15, the specific data transmission process includes the following steps.

Step 0: When the AF requests support for alternative PDU set QoS, it also provides the corresponding protocol description information. The corresponding PCC Rule is set by PCF, and SMF provides the protocol description information to UPF. Optionally, a new field is added to the protocol description information, including a field indicating the start or end of the data burst (direct or indirect indication). The data burst size can also be used as start information.

Step 1: The SMF sends the alternative PDU set QoS profile to the RAN, and instructs the RAN to adjust the PDU set QoS level based on the user plane indication.

Step 2: The UPF identifies and labels PDU set information. When the IP packet header sent by the AS contains data burst start or end information, the UPF puts this information in the GTP-U header and sends it to the RAN.

Step 3: The RAN dynamically adjusts the PDU set QoS level based on the start or end information of the data burst identified by the user plane data identifier, according to the configuration of the alternative PDU set QoS profile.

### Example 3

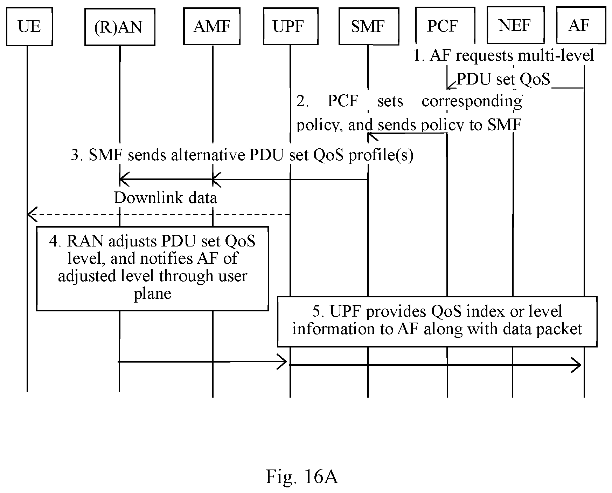

In this example 3, the RAN side autonomously adjusts the PDU set QoS level based on pre-configuration and reports the adjustment to the AF. As shown in Fig. 16A, the specific data transmission process includes the following steps.

Step 1: When the AF requests support for alternative PDU set QoS, it sets the trigger conditions for QoS level adjustment (e.g., the trigger conditions may include identification information of the start or end of a data burst); at the same time, it subscribes to a notification of whether a QoS target is met.

Step 2: The PCF sets the relevant PCC Rule based on the alternative PDU set QoS information, and simultaneously sets an instruction to report the adjustment or decision result, which is then provided to the SMF.

Step 3: The SMF sends the alternative PDU set QoS profile(s) to the RAN, and instructs the RAN to autonomously adjust the PDU set QoS level according to the triggering conditions; at the same time, it instructs the RAN to report the QoS level adjustment information.

Step 4: After the RAN adjusts the PDU set QoS level, it notifies the AF of the adjusted level through the user plane.

Step 5: After receiving a data packet containing QoS index/level adjustments, the UPF exposes the QoS index or level information to the AF along with the data packet, or provides the QoS index or level information to the AF through event exposure. If the UPF provides QoS parameters or PDU set-related QoS parameters to the AF or AS, the UPF can map the QoS index/level reported by the RAN to the corresponding QoS parameter according to the mapping information between QoS parameter and the index/level provided by the SMF, thereby achieving reporting.

### Example 4

In this example 4, the AF can provide third information, including alternative QoS parameters or parameter sets related to service information (such as PDU set), and simultaneously provide service information to the network. Based on the service information and the correspondence between the service information and the alternative QoS parameter, the network maps the service flow to the QoS flow and provides the configuration of the alternative QoS parameter or parameter set related to the service information for the QoS flow. After this configuration is provided to the RAN, the RAN can adjust the alternative QoS parameters or their corresponding levels according to changes in radio resources and in conjunction with the service information. The service information can be provided to the RAN through the user plane (identified by the UPF in the GTP-U header). The adjustment by the RAN of the alternative QoS level may depend on the implementation. The service information in this example 4 may include at least one of the following: PDU set information, service characteristics, medium type, medium characteristics, traffic information, etc.

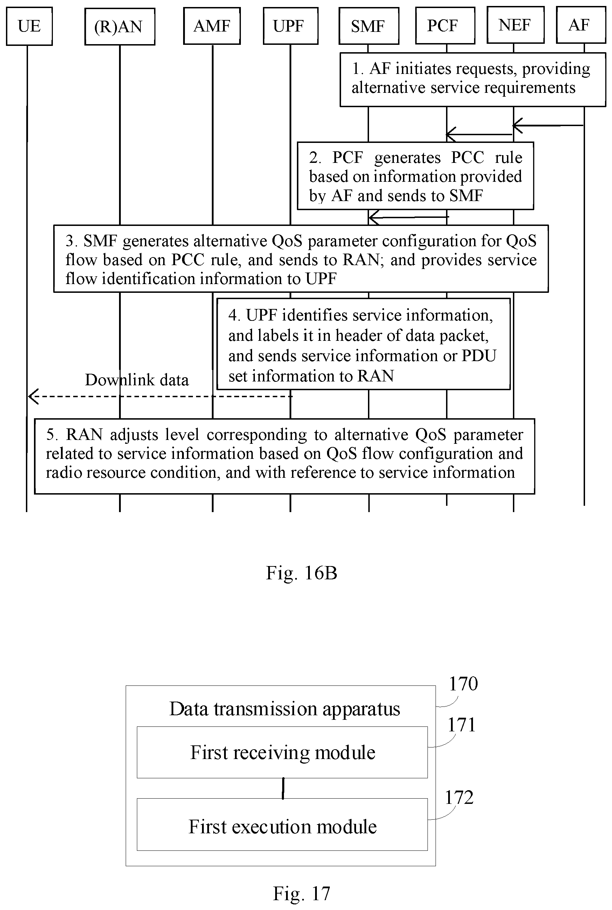

As shown in Fig. 16B, the specific data transmission process includes the following steps.

Step 1: The AF initiates an AF session with required QoS request, providing third information describing the alternative service requirements. The third information includes alternative QoS parameter or parameter set related to service information (e.g., PDU set) and its corresponding index or level, service information, and a correspondence between the alternative QoS parameter or parameter set related to the service information and the service information. After authentication by the NEF, the NEF provides the alternative service requirements to the PCF.

Step 2: Based on the information provided by the AF, the PCF generates an alternative QoS parameter set related to the service information (such as PDU set) for the corresponding QoS flow, as well as the correspondence between the service information and the alternative QoS parameter set, and provides a mapping from service flow to QoS flow (the mapping from service flow to QoS flow can include mapping to one or more QoS flows according to the service information); generates the first policy information (PCC Rule) and sends the PCC Rule to the SMF.

Step 3: The SMF generates the first information based on the PCC Rule, the first information including the configuration of alternative QoS parameter for each QoS flow, and sends it to the RAN. The first information includes alternative QoS parameters or parameter sets related to the service information (PDU set) and their corresponding indexes or levels, as well as the correspondence between the alternative QoS parameters or parameter sets related to the service information (such as PDU set) and the service information. The SMF also provides the UPF with service flow identification information for the UPF to perform service information identification and data flow mapping.

Step 4: The UPF identifies the service information and can also identify the service information or PDU set information in the GTP-U header of the data packet and send it to the RAN.

Step 5: Based on the configuration of the alternative QoS parameters related to the service information, considering the radio resource situation, and with reference to the service information or PDU set information, the RAN performs the first operation by selecting the appropriate level corresponding to the alternative QoS parameter related to the service information (such as the PDU set). The QoS parameter adjustment by the RAN depends on the implementation.

Specifically, the first operation can, for example, involve the RAN determining whether the radio conditions meet the currently set QoS parameter requirements; if the requirements cannot be met, the RAN may downgrade the level corresponding to the alternative QoS parameter or the level corresponding to the alternative QoS parameter related to the PDU set. When radio resources meet the requirements, the RAN may upgrade the level corresponding to the QoS parameter. Taking the service information being a medium type as an example, the SMF can provide the RAN with a correspondence between medium type and alternative QoS parameters or alternative QoS parameters related to the PDU set. When the UPF provides the RAN with the medium type indication in the GTP-U header of the data packet through the user plane, for example, providing video medium type (media type 1) or audio medium type (media type 2), the RAN can adjust to the priority corresponding to the appropriate alternative QoS parameter based on the indication of the video or audio medium type (media type 1 or media type 2) and the correspondence configured in the control plane.

For other service information, such as PDU set information, service characteristics, medium characteristics, traffic information, and traffic characteristics, adjustment can be made in accordance with the methods described in the above embodiments, and will not be repeated here.

It should be noted that the data transmission method provided in the embodiment of this disclosure can be executed by a data transmission apparatus or a control module within that data transmission apparatus for executing the data transmission method. This disclosure uses the execution of the data transmission method by a data transmission apparatus as an example to illustrate the data transmission apparatus provided in the embodiments of this disclosure.

Please refer to Fig. 17, which is a schematic structural diagram of a data transmission apparatus according to an embodiment of this disclosure. This apparatus is applied to a first device, which may be an RAN node or other device with similar function. As shown in Fig. 17, the data transmission apparatus 170 includes:
a first receiving module 171, configured to receive first information sent by a first network function;
a first execution module 172, configured to perform a first operation based on the first information; wherein the first operation includes at least one of the following:
   for each protocol data unit set (PDU set), adjusting or deciding on an alternative PDU set Quality of Service (QoS) profiles or patterns;
   for each PDU set, adjusting or deciding on one or more parameters in the alternative PDU set QoS profile or pattern;
   for each QoS flow, adjusting or deciding on the alternative PDU set QoS profile or pattern;
   for each QoS flow, adjusting or deciding on one or more parameters in the alternative PDU set QoS profile or pattern;
   for one or more QoS flows, adjusting or deciding on an alternative QoS parameter or parameter set related to service information; or
   for one or more QoS flows, adjusting or deciding on an index or level corresponding to the alternative QoS parameter or parameter set related to the service information.

Optionally, the first execution module 172 is specifically configured to: perform the first operation based on the first information according to change in at least one of the following:
radio resource information;
wireless channel information; or
service information.

Optionally, the parameter in the alternative PDU set QoS profile or pattern includes at least one of:
PDU set delay budget (PSDB);
PDU set error rate (PSER); or
PDU set integrated handling information (PSIHI).

Optionally, the data transmission apparatus 170 further includes:
a first sending module, configured to send first notification information to the first network function when a first condition is met; wherein the first condition includes at least one of the following:
radio resources cannot meet a requirement or cannot meet the requirement again;
the first device determines that a parameter in the PDU set QoS profile or pattern cannot be satisfied or cannot be satisfied again;
a lowest priority of alternative PDU set QoS profiles or patterns cannot be satisfied;
a QoS parameter or parameter set related to service information cannot be satisfied or cannot be satisfied again; or
a lowest priority of alternative QoS parameters or parameter sets related to the service information cannot be satisfied;
wherein the first notification information is used for notifying at least one of the following:
   a parameter in the PDU set QoS profile or pattern cannot be satisfied or cannot be satisfied again;
   an index or level corresponding to an alternative PDU set QoS profile or pattern that can be satisfied;
   an index or level corresponding to the lowest priority of the alternative PDU set QoS profiles or patterns cannot be satisfied;
   a QoS parameter or parameter set related to service information cannot be satisfied or cannot be satisfied again;
   an index or level corresponding to an alternative QoS parameter or parameter set related to the service information that can be satisfied; or
   an index or level corresponding to the lowest priority of alternative QoS parameters or parameter sets related to the service information cannot be satisfied.

Optionally, the first execution module 172 is specifically configured to: perform the first operation based on the first information and the service information received from the fourth network function.

Optionally, the first information includes at least one of the following:
one or more alternative PDU set QoS profiles or patterns;
a one-to-one correspondence between the alternative PDU set QoS profiles or patterns and the protocol data unit set importances (PSIs);
a correspondence between multiple alternative PDU set QoS profiles or patterns and one PSI;
one or more alternative QoS parameters or parameter sets related to the service information;
an index or level corresponding to the alternative QoS parameter or parameter set related to the service information;
a correspondence between the alternative QoS parameter or parameter set and the service information;
a correspondence between the alternative QoS parameter or parameter set related to the service information and the service information;
a correspondence between an index or level corresponding to the alternative QoS parameter or parameter set related to the service information and the service information;
a first indication, used for instructing the first device to adjust or decide on at least one of the following: a PDU set QoS profile or pattern, an alternative QoS profile or pattern, or one or more parameters in the alternative PDU set QoS profile or pattern; or
instruction to report an adjustment or decision result.

Optionally, the data transmission apparatus 170 further includes:
a first reporting module, configured to report second information, wherein the second information includes at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
an index or level corresponding to an alternative QoS parameter or parameter set; or
an index or level corresponding to an alternative QoS parameter or parameter set related to the service information.

Optionally, the service information includes at least one of the following:
PDU set information;
service characteristics;
medium type;
medium characteristics; or
traffic information.

The data transmission apparatus 170 according to the embodiment of this disclosure can implement the various processes of the method embodiment shown in Fig. 2 above and achieve the same technical effect. To avoid repetition, it will not be described again here.

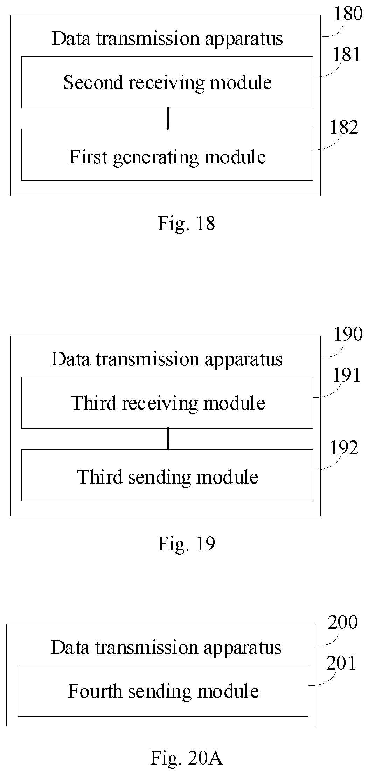

Please refer to Fig. 18, which is a schematic structural diagram of a data transmission apparatus according to an embodiment of this disclosure. This apparatus is applied to a second network function, which may be a PCF or other network function with similar function. As shown in Fig. 18, the data transmission apparatus 180 includes:
a second receiving module 181, configured to receive third information sent by a second device;
a first generating module 182, configured to generate first policy information based on the third information;
wherein the third information includes at least one of the following:
   one or more alternative PDU set QoS profiles or patterns;
   one or more indexes or levels corresponding to one or more alternative PDU set QoS profiles or patterns;
   a one-to-one correspondence between alternative PDU set QoS profiles or patterns and PSIs;
   a correspondence between multiple alternative PDU set QoS profiles or patterns and one PSI;
   instruction to report an adjustment or decision result;
   an alternative QoS parameter or parameter set related to service information;
   an index or level corresponding to the alternative QoS parameter or parameter set related to the service information;
   the service information;
   a correspondence between the alternative QoS parameter or parameter set and the service information;
   a correspondence between the alternative QoS parameter or parameter set related to service information and the service information; or
   a correspondence between an index or level corresponding to the alternative QoS parameter or parameter set related to the service information and the service information.

Optionally, the first policy information includes at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns (or their corresponding indexes or levels) and PSIs;
a correspondence between multiple alternative PDU set QoS profiles or patterns (or their corresponding indexes or levels) and a single PSI;
a second indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets related to the service information;
one or more indexes or levels corresponding to one or more alternative QoS parameters or parameter sets related to the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

Optionally, the data transmission apparatus 180 further includes:
a second sending module, configured to send the first policy information to the first network function.

Optionally, the second receiving module 181 is specifically configured to: receive the third information sent by the second device through a third network function.

Optionally, the service information includes at least one of the following:
PDU set information;
service characteristics;
medium type;
medium characteristics; or
traffic information.

Optionally, the data transmission apparatus 180 further includes:
a mapping module, configured to map a service flow to one or more QoS flows based on the third information, wherein the first policy information is applied to one or more QoS flows.

The data transmission apparatus 180 according to the embodiment of this disclosure can implement the various processes of the method embodiment shown in Fig. 3 above and achieve the same technical effect. To avoid repetition, it will not be described again here.

Please refer to Fig. 19, which is a schematic structural diagram of a data transmission apparatus according to an embodiment of this disclosure. This apparatus is applied to a first network function, which may be an SMF or other network function with similar function. As shown in Fig. 19, the data transmission apparatus 190 includes:
a third receiving module 191, configured to receive first policy information sent by a second network function;
a third sending module 192, configured to send first information to the first device according to the first policy information; the first policy information includes at least one of the following:
   one or more alternative PDU set QoS profiles or patterns;
   one or more indexes or levels corresponding to one or more alternative PDU set QoS profiles or patterns;
   a one-to-one correspondence between alternative PDU set QoS profiles or patterns and PSIs;
   a correspondence between multiple alternative PDU set QoS profiles or patterns and one PSI;
   a second indication, used for instructing the first device to adjust or decide on at least one of the following: PDU set QoS profile or pattern, alternative QoS profile or pattern, or one or more parameters in the alternative PDU set QoS profile or pattern;
   instruction to report an adjustment or decision result;
   one or more alternative QoS parameters or parameter sets related to the service information;
   one or more indexes or levels corresponding to one or more alternative QoS parameters or parameter sets related to the service information;
   a correspondence between the alternative QoS parameter or parameter set and the service information;
   a correspondence between the alternative QoS parameter or parameter set related to the service information and the service information; or
   a correspondence between an index or level corresponding to the alternative QoS parameter or parameter set related to the service information and the service information.

Optionally, the first information includes at least one of the following:
one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
a first indication, used for instructing the first device to adjust or decide on at least one of the following: a PDU set QoS profile or pattern, an alternative QoS profile or pattern, or one or more parameters in the alternative PDU set QoS profile or pattern;
instruction to report an adjustment or decision result;
one or more alternative QoS parameters or parameter sets related to the service information;
an index or level corresponding to the alternative QoS parameter or parameter set related to the service information;
a correspondence between the alternative QoS parameter or parameter set and the service information;
a correspondence between alternative QoS parameter or parameter set related to service information and the service information; or
a correspondence between an index or level corresponding to the alternative QoS parameter or parameter set related to the service information and the service information.

Optionally, the first information is applied to one or more QoS flows.

Optionally, the third sending module 192 is further configured to: send seventh information to the fourth network function, wherein the seventh information is used for identifying, classifying and/or mapping a service flow;
wherein the seventh information includes at least one of the following:
service information;
a mapping relationship between the service information and a QoS flow; or
a mapping relationship between the service information and a priority of the QoS flow.

The data transmission apparatus 190 according to the embodiment of this disclosure can implement the various processes of the method embodiment shown in Fig. 4 above and achieve the same technical effect. To avoid repetition, it will not be described again here.

Please refer to Fig. 20A, which is a schematic structural diagram of a data transmission apparatus according to an embodiment of this disclosure. This apparatus is applied to a second device, which may be an AF or other device with similar function. As shown in Fig. 20A, the data transmission apparatus 200 includes:
a fourth sending module 201, configured to send third information to a second network function; the third information includes at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
instruction to report an adjustment or decision result;
an alternative QoS parameter or parameter set related to service information;
an index or level corresponding to the alternative QoS parameter or parameter set related to the service information;
the service information;
a correspondence between the alternative QoS parameter or parameter set and the service information;
a correspondence between alternative QoS parameter or parameter set related to service information and the service information; or
a correspondence between an index or level corresponding to the alternative QoS parameter or parameter set related to the service information and the service information.

Optionally, the fourth sending module 201 is specifically configured to: send the third information to the second network function through a third network function.

The data transmission apparatus 200 according to the embodiment of this disclosure can implement the various processes of the method embodiment shown in Fig. 5A above and achieve the same technical effect. To avoid repetition, it will not be described again here.

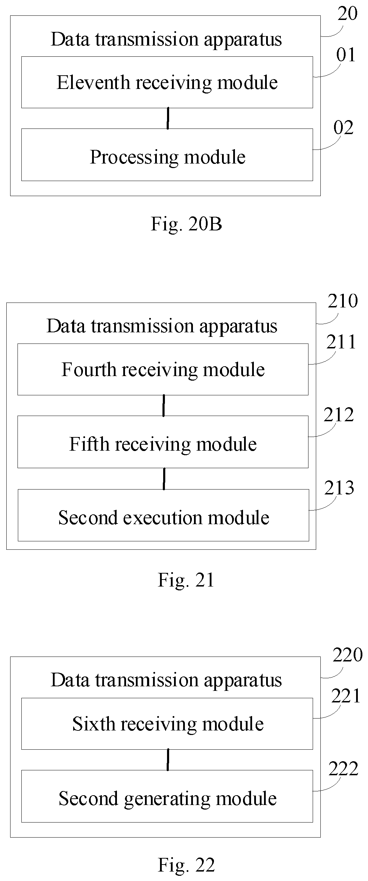

Please refer to Fig. 20B, which is a schematic structural diagram of a data transmission apparatus according to an embodiment of this disclosure. This apparatus is applied to a fourth network function, which can be a UPF or other network function with similar function. As shown in Fig. 20B, the data transmission apparatus 20 includes:
an eleventh receiving module 01, configured to receive seventh information sent by a first network function;
a processing module 02, configured to identify, classify and/or map the service flow based on the seventh information; wherein the seventh information includes at least one of the following:
   service information;
   a mapping relationship between the service information and a QoS flow; or
   a mapping relationship between the service information and a priority of the QoS flow.

Optionally, the processing module 02 is further configured to: based on the identification, classification and/or mapping of the service flow, send service information to the first device, wherein the service information is applied to one or more QoS flows.

The data transmission apparatus 20 according to the embodiment of this disclosure can implement the various processes of the method embodiment shown in Fig. 5B above and achieve the same technical effect. To avoid repetition, it will not be described again here.

Please refer to Fig. 21, which is a schematic structural diagram of a data transmission apparatus according to an embodiment of this disclosure. This apparatus is applied to a first device, which may be an RAN node or other device with similar function. As shown in Fig. 21, the data transmission apparatus 210 includes:
a fourth receiving module 211, configured to receive fourth information sent by a first network function;
a fifth receiving module 212, configured to receive a third indication sent by a fourth network function;
a second execution module 213, configured to perform a second operation based on the fourth information and the third indication; the second operation includes at least one of the following:
   for each QoS flow, adjusting or deciding on one or more parameters in an alternative QoS profile or pattern;
   for each QoS flow, adjusting or deciding on one or more parameters in an alternative PDU set QoS profile or pattern;
   for each PDU set, adjusting or deciding on one or more parameters in the alternative PDU set QoS profile or pattern;
   reporting an index or level corresponding to an adjusted QoS profile or pattern;
   reporting an index or level corresponding to an adjusted PDU set QoS profile or pattern;
   reporting adjustment or decision result information;
   for one or more QoS flows, adjusting or deciding on an alternative QoS parameter or parameter set; or
   for one or more QoS flows, adjusting or deciding on an alternative QoS parameter or parameter set related to service information.

Optionally, the fourth information includes at least one of the following:
an alternative QoS profile or pattern;
an alternative PDU set QoS profile or pattern;
a fourth indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result; or
an alternative QoS parameter or parameter set related to service information.

Optionally, the third indication is an indication contained in the header of the data packet sent by the fourth network function, and includes at least one of the following:
start information of a data burst;
end information of the data burst; or
a duration of the data burst.

The data transmission apparatus 210 according to the embodiment of this disclosure can implement the various processes of the method embodiment shown in Fig. 6 above and achieve the same technical effect. To avoid repetition, it will not be described again here.

Please refer to Fig. 22, which is a schematic structural diagram of a data transmission apparatus according to an embodiment of this disclosure. This apparatus is applied to a second network function, which may be a PCF or other network function with similar function. As shown in Fig. 22, the data transmission apparatus 220 includes:
a sixth receiving module 221, configured to receive fifth information sent by a second device;
a second generating module 222, configured to generate second policy information based on the fifth information;
wherein the fifth information includes at least one of the following:
   one or more alternative QoS profiles or patterns;
   one or more indexes or levels corresponding to one or more alternative QoS profiles or patterns;
   one or more alternative PDU set QoS profiles or patterns;
   one or more indexes or levels corresponding to one or more alternative PDU set QoS profiles or patterns;
   protocol description information;
   one or more alternative QoS parameters or parameter sets;
   one or more indexes or levels corresponding to one or more alternative QoS parameters or parameter sets;
   one or more alternative QoS parameters or parameter sets related to the service information; or
   one or more indexes or levels corresponding to one or more alternative QoS parameters or parameter sets related to the service information.

Optionally, the second policy information includes at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
a fifth indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

Optionally, the data transmission apparatus 220 further includes:
a fifth sending module, configured to send the second policy information to a first network function.

Optionally, the protocol description information includes at least one of the following:
start information of a data burst;
end information of the data burst; or
a duration of the data burst.

The data transmission apparatus 220 according to the embodiment of this disclosure can implement the various processes of the method embodiment shown in Fig. 7 above and achieve the same technical effect. To avoid repetition, it will not be described again here.

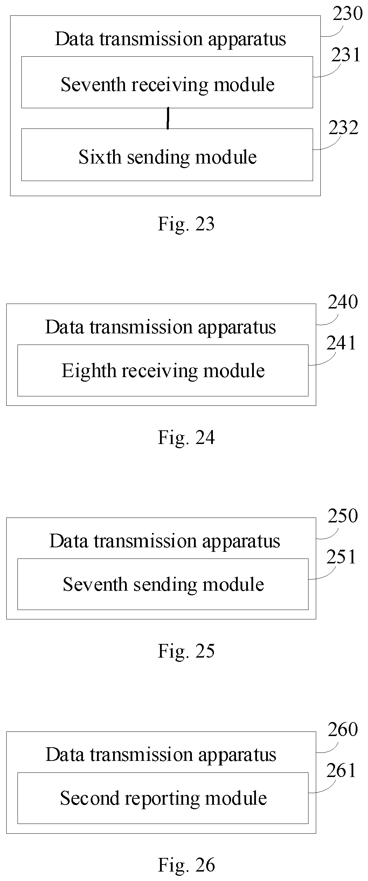

Please refer to Fig. 23, which is a schematic structural diagram of a data transmission apparatus according to an embodiment of this disclosure. This apparatus is applied to a first network function, which may be an SMF or other network function with similar function. As shown in Fig. 23, the data transmission apparatus 230 includes:
a seventh receiving module 231, configured to receive the second policy information sent by the second network function;
a sixth sending module 132, configured to send fourth information to a first device and/or send sixth information to a fourth network function according to the second policy information;
wherein the second policy information includes at least one of the following:
   one or more alternative QoS profiles or patterns;
   one or more indexes or levels corresponding to one or more alternative QoS profiles or patterns;
   one or more alternative PDU set QoS profiles or patterns;
   one or more indexes or levels corresponding to one or more alternative PDU set QoS profiles or patterns;
   protocol description information;
   a fifth indication, used for instructing a first device to adjust or decide on at least one of the following: PDU set QoS profile or pattern, alternative QoS profile or pattern, or one or more parameters in the alternative PDU set QoS profile or pattern;
   instruction to report an adjustment or decision result;
   one or more alternative QoS parameters or parameter sets;
   one or more indexes or levels corresponding to one or more alternative QoS parameters or parameter sets;
   one or more alternative QoS parameters or parameter sets related to the service information; or
   one or more indexes or levels corresponding to one or more alternative QoS parameters or parameter sets related to the service information.

Optionally, the sixth information includes at least one of the following:
protocol description information; or
instruction to identify and label a data burst.

Optionally, the fourth information includes at least one of the following:
an alternative QoS profile or pattern;
an alternative PDU set QoS profile or pattern;
a fourth indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result;
an alternative QoS parameter or parameter set; or
an alternative QoS parameter or parameter set related to service information.

The data transmission apparatus 230 according to the embodiment of this disclosure can implement the various processes of the method embodiment shown in Fig. 8 above and achieve the same technical effect. To avoid repetition, it will not be described again here.

Please refer to Fig. 24, which is a schematic structural diagram of a data transmission apparatus according to an embodiment of this disclosure. This apparatus is applied to a fourth network function, which can be a UPF or other network function with similar function. As shown in Fig. 24, the data transmission apparatus 240 includes:
an eighth receiving module 241, configured to receive sixth information sent by a first network function; wherein the sixth information includes at least one of the following:
protocol description information; or
instruction to identify and label a data burst.

Optionally, the data transmission apparatus 240 further includes:
a processing module, configured to identify and label a data burst, place at least one of the following information about the data burst in the header of the data packet: start information of the data burst, end information of the data burst, or a duration of the data burst, and send the data packet to a first device through a user plane.

The data transmission apparatus 240 according to the embodiment of this disclosure can implement the various processes of the method embodiment shown in Fig. 9 above and achieve the same technical effect. To avoid repetition, it will not be described again here.

Please refer to Fig. 25, which is a schematic structural diagram of a data transmission apparatus according to an embodiment of this disclosure. This apparatus is applied to a second device, which may be an AF or other device with similar function. As shown in Fig. 25, the data transmission apparatus 250 includes:
a seventh sending module 251, configured to send fifth information to a second network function; the fifth information includes at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

Optionally, the protocol description information includes at least one of the following:
start information of a data burst;
end information of the data burst; or
a duration of the data burst.

Optionally, the seventh sending module 251 is specifically configured to: send the fifth information to the second network function through a third network function.

The data transmission apparatus 250 according to the embodiment of this disclosure can implement the various processes of the method embodiment shown in Fig. 10 above and achieve the same technical effect. To avoid repetition, it will not be described again here.

Please refer to Fig. 26, which is a schematic structural diagram of a data transmission apparatus according to an embodiment of this disclosure. This apparatus is applied to a first device, which may be an RAN node or other device with similar function. As shown in Fig. 26, the data transmission apparatus 260 includes:
a second reporting module 261, configured to report second information, wherein the second information includes at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

Optionally, the second reporting module 261 is specifically configured to: send the second information to a third device through a fourth network function.

The data transmission apparatus 260 according to the embodiment of this disclosure can implement the various processes of the method embodiment shown in Fig. 11 above and achieve the same technical effect. To avoid repetition, it will not be described again here.

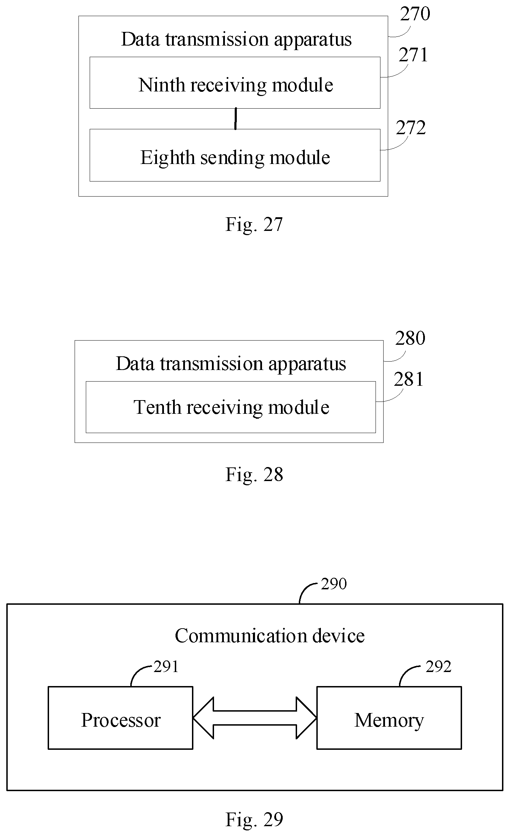

Please refer to Fig. 27, which is a schematic structural diagram of a data transmission apparatus according to an embodiment of this disclosure. This apparatus is applied to a fourth network function, which may be a UPF or other network function with similar function. As shown in Fig. 27, the data transmission apparatus 270 includes:
a ninth receiving module 271, configured to receive second information reported by a first device;
an eighth sending module 272, configured to generate eighth information based on the second information and send the eighth information carried in a header to a third device;
wherein the second information includes at least one of the following:
   a parameter in a QoS profile or pattern;
   a parameter in a PDU set QoS profile or pattern;
   an index or level corresponding to an alternative QoS profile or pattern;
   an index or level corresponding to an alternative PDU set QoS profile or pattern;
   QoS parameters or parameter sets related to service information;
   an alternative QoS parameter or parameter set;
   an index or level corresponding to an alternative QoS parameter or parameter set;
   an alternative QoS parameter or parameter set related to service information; or
   an index or level corresponding to an alternative QoS parameter or parameter set related to the service information.
   wherein the eighth information includes at least one of the following:
      a parameter in a QoS profile or pattern;
      a parameter in a PDU set QoS profile or pattern;
      an index or level corresponding to an alternative QoS profile or pattern;
      an index or level corresponding to an alternative PDU set QoS profile or pattern;
      QoS parameters or parameter sets related to service information;
      an alternative QoS parameter or parameter set;
      an index or level corresponding to an alternative QoS parameter or parameter set;
      an alternative QoS parameter or parameter set related to service information; or
      an index or level corresponding to an alternative QoS parameter or parameter set related to the service information.

Optionally, the eighth sending module 272 is further configured to: send the eighth information to a third device according to mapping information provided by a first network function, wherein the mapping information includes at least one of the following:
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

The data transmission apparatus 270 according to the embodiment of this disclosure can implement the various processes of the method embodiment shown in Fig. 12 above and achieve the same technical effect. To avoid repetition, it will not be described again here.

Please refer to Fig. 28, which is a schematic structural diagram of a data transmission apparatus according to an embodiment of this disclosure. This apparatus is applied to a third device, which may be an AF, AS, or other device with similar function. As shown in Fig. 28, the data transmission apparatus 280 includes:
a tenth receiving module 281, configured to receive eighth information sent by a fourth network function, the eighth information including at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

The data transmission apparatus 280 according to the embodiment of this disclosure can implement the various processes of the method embodiment shown in Fig. 13 above and achieve the same technical effect. To avoid repetition, it will not be described again here.

Optionally, as shown in Fig. 29, an embodiment of the present disclosure also provides a communication device 290, including a processor 291, a memory 292, and a program or instructions stored in the memory 292 and executable on the processor 291. When the program or instructions are executed by the processor 291, the various processes of the above-described data transmission method embodiments are implemented and the same technical effects are achieved. To avoid repetition, they will not be described again here.

An embodiment of this disclosure also provides a readable storage medium storing a program or instructions. When the program or instructions are executed by a processor, the various processes of the above-described data transmission method embodiments are implemented and the same technical effects are achieved. To avoid repetition, further details are omitted here.

Computer-readable media include both permanent and non-permanent, removable and non-removable media, which can store information using any method or technology. Information can be computer-readable instructions, data structures, modules of programs, or other data. Examples of computer storage media include, but are not limited to, phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, CD-ROM, digital versatile disc (DVD) or other optical storage, magnetic tape, magnetic disk storage or other magnetic storage devices, or any other non-transmission medium that can be used to store information accessible by a computing device. As defined herein, computer-readable media does not include transitory computer-readable media, such as modulated data signals and carrier waves.

It should be noted that, herein, the term "including", "comprising", or any other variations thereof are intended to cover non-exclusive inclusion, such that a process, method, article, or apparatus that includes a list of elements includes not only those elements but also other elements not expressly listed, or elements inherent in such a process, method, article, or apparatus. Unless otherwise specified, an element defined by the phrase "including one..." does not exclude the presence of other identical elements in the process, method, article, or apparatus that includes that element.

The sequence numbers of the embodiments disclosed above are for descriptive purposes only and do not represent the superiority or inferiority of the embodiments.

Through the above description of the embodiments, those skilled in the art can clearly understand that the methods of the above embodiments can be implemented by means of software plus necessary general-purpose hardware platforms. Of course, they can also be implemented by hardware, but in many cases the former is a better implementation method. Based on this understanding, the technical solution of this disclosure, in essence, or the part that contributes to the prior art, can be embodied in the form of a software product. This computer software product is stored in a storage medium (such as ROM/RAM, magnetic disk, optical disc) and includes several instructions to cause a service classification device (which may be a mobile phone, computer, server, air conditioner, or network device, etc.) to execute the methods described in the various embodiments of this disclosure.

The above description only provides preferred embodiments of this disclosure. It should be noted that for those skilled in the art, several improvements and modifications can be made without departing from the principles of this disclosure, and these improvements and modifications should also be considered within the scope of this disclosure.

## Claims

1. A data transmission method, performed by a first device, comprising:
receiving, by the first device, first information sent by a first network function;
performing, by the first device, a first operation based on the first information;
wherein the first operation comprises at least one of the following:
for each protocol data unit set (PDU set), adjusting or deciding on an alternative PDU set Quality of Service (QoS) profile or pattern;
for each PDU set, adjusting or deciding on one or more parameters in the alternative PDU set QoS profile or pattern;
for each QoS flow, adjusting or deciding on the alternative PDU set QoS profile or pattern;
for each QoS flow, adjusting or deciding on one or more parameters in the alternative PDU set QoS profile or pattern;
for one or more QoS flows, adjusting or deciding on an alternative QoS parameter or parameter set related to service information; or
for one or more QoS flows, adjusting or deciding on an index or level corresponding to the alternative QoS parameter or parameter set related to the service information.

2. The method according to claim 1, wherein the performing, by the first device, the first operation based on the first information comprises:
performing, by the first device, the first operation based on the first information in accordance with a change in at least one of:
radio resource information;
wireless channel information; or
service information.

3. The method according to claim 1, wherein the parameter in the alternative PDU set QoS profile or pattern comprises at least one of:
PDU set delay budget (PSDB);
PDU set error rate (PSER); or
PDU set integrated handling information (PSIHI).

4. The method according to claim 1, further comprising:
in a case that a first condition is met, sending, by the first device, first notification information to the first network function; wherein the first condition comprises at least one of the following:
radio resources cannot meet a requirement or cannot meet the requirement again;
the first device determines that a parameter in the PDU set QoS profile or pattern cannot be satisfied or cannot be satisfied again;
a lowest priority of alternative PDU set QoS profiles or patterns cannot be satisfied;
a QoS parameter or parameter set related to service information cannot be satisfied or cannot be satisfied again; or
a lowest priority of alternative QoS parameters or parameter sets related to the service information cannot be satisfied;
wherein the first notification information is used for notifying at least one of the following:
a parameter in the PDU set QoS profile or pattern cannot be satisfied or cannot be satisfied again;
an index or level corresponding to an alternative PDU set QoS profile or pattern that can be satisfied;
an index or level corresponding to the lowest priority of the alternative PDU set QoS profiles or patterns cannot be satisfied;
a QoS parameter or parameter set related to service information cannot be satisfied or cannot be satisfied again;
an index or level corresponding to an alternative QoS parameter or parameter set related to the service information that can be satisfied; or
an index or level corresponding to the lowest priority of alternative QoS parameters or parameter sets related to the service information cannot be satisfied.

5. The method according to claim 1, wherein the performing the first operation based on the first information comprises:
performing, by the first device, the first operation based on the first information and the service information received from a fourth network function.

6. The method according to claim 1, wherein the first information comprises at least one of the following:
one or more alternative PDU set QoS profiles or patterns;
a one-to-one correspondence between alternative PDU set QoS profiles or patterns and PDU set importances (PSIs);
a correspondence between multiple alternative PDU set QoS profiles or patterns and one PSI;
one or more alternative QoS parameters or parameter sets related to the service information;
an index or level corresponding to the alternative QoS parameter or parameter set related to the service information;
a correspondence between the alternative QoS parameter or parameter set and the service information;
a correspondence between the alternative QoS parameter or parameter set related to the service information and the service information;
a correspondence between an index or level corresponding to the alternative QoS parameter or parameter set related to the service information and the service information;
a first indication, used for instructing a first device to adjust or decide on at least one of the following: PDU set QoS profile or pattern, alternative QoS profile or pattern, or one or more parameters in the alternative PDU set QoS profile or pattern; or
instruction to report an adjustment or decision result.

7. The method according to claim 1, further comprising:
reporting, by the first device, second information, wherein the second information comprises at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
an index or level corresponding to an alternative QoS parameter or parameter set; or
an index or level corresponding to an alternative QoS parameter or parameter set related to the service information.

8. The method according to any one of claims 1 to 7, wherein the service information comprises at least one of the following:
PDU set information;
service characteristics;
medium type;
medium characteristics; or
traffic information.

9. A data transmission method, performed by a second network function, comprising:
receiving, by the second network function, third information sent by a second device;
generating, by the second network function, first policy information based on the third information;
wherein the third information comprises at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
instruction to report an adjustment or decision result;
an alternative QoS parameter or parameter set related to service information;
an index or level corresponding to the alternative QoS parameter or parameter set related to the service information;
the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

10. The method according to claim 9, wherein the first policy information comprises at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
a second indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets related to the service information;
one or more indexes or levels corresponding to one or more alternative QoS parameters or parameter sets related to the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

11. The method according to claim 9 or 10, further comprising:
sending, by the second network function, the first policy information to a first network function.

12. The method according to claim 9, wherein the receiving, by the second network function, the third information sent by the second device comprises:
receiving, by the second network function through a third network function, the third information sent by the second device.

13. The method according to claim 9 or 10, wherein the service information comprises at least one of the following:
PDU set information;
service characteristics;
medium type;
medium characteristics; or
traffic information.

14. The method according to claim 9 or 10, further comprising:
mapping, by the second network function, a service flow to one or more QoS flows based on the third information, wherein the first policy information is applied to the one or more QoS flows.

15. A data transmission method, performed by a first network function, comprising:
receiving, by the first network function, first policy information sent by a second network function;
sending, by the first network function, first information to a first device according to the first policy information;
wherein the first policy information comprises at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
a second indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets related to service information;
one or more indexes or levels corresponding to one or more alternative QoS parameters or parameter sets related to the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

16. The method according to claim 15, wherein the first information comprises at least one of the following:
one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
a first indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets related to the service information;
an index or level corresponding to the alternative QoS parameter or parameter set related to the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

17. The method according to claim 15 or 16, wherein the first information is applied to one or more QoS flows.

18. The method according to claim 15 or 16, further comprising:
sending, by the first network function, seventh information to a fourth network function, wherein the seventh information is used for identifying, classifying and/or mapping a service flow;
wherein the seventh information comprises at least one of the following:
the service information;
a mapping relationship between the service information and a QoS flow; or
a mapping relationship between the service information and a priority of the QoS flow.

19. A data transmission method, performed by a second device, comprising:
sending, by the second device, third information to a second network function; wherein the third information comprises at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
instruction to report an adjustment or decision result;
an alternative QoS parameter or parameter set related to service information;
an index or level corresponding to the alternative QoS parameter or parameter set related to the service information;
the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

20. The method according to claim 19, wherein the sending, by the second device, the third information to the second network function comprises:
sending, by the second device, the third information to the second network function through a third network function.

21. A data transmission method, performed by a fourth network function, comprising:
receiving, by the fourth network function, seventh information sent by a first network function;
identifying, classifying and/or mapping, by the fourth network function, a service flow based on the seventh information;
wherein the seventh information comprises at least one of the following:
service information;
a mapping relationship between the service information and a QoS flow; or
a mapping relationship between the service information and a priority of the QoS flow.

22. The method according to claim 21, further comprising:
sending, by the fourth network function, the service information to a first device based on the identification, classification, and/or mapping of the service flow, wherein the service information is applied to one or more QoS flows.

23. A data transmission method, performed by a first device, comprising:
receiving, by the first device, fourth information sent by a first network function;
receiving, by the first device, a third indication sent by a fourth network function;
performing, by the first device, a second operation based on the fourth information and the third indication; wherein the second operation comprises at least one of the following:
for each QoS flow, adjusting or deciding on one or more parameters in an alternative QoS profile or pattern;
for each QoS flow, adjusting or deciding on one or more parameters in an alternative PDU set QoS profile or pattern;
for each PDU set, adjusting or deciding on one or more parameters in the alternative PDU set QoS profile or pattern;
reporting an index or level corresponding to an adjusted QoS profile or pattern;
reporting an index or level corresponding to an adjusted PDU set QoS profile or pattern;
reporting adjustment or decision result information;
for one or more QoS flows, adjusting or deciding on an alternative QoS parameter or parameter set; or
for one or more QoS flows, adjusting or deciding on an alternative QoS parameter or parameter set related to service information.

24. The method according to claim 23, wherein the fourth information comprises at least one of the following:
an alternative QoS profile or pattern;
an alternative PDU set QoS profile or pattern;
a fourth indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result; or
an alternative QoS parameter or parameter set related to service information.

25. The method according to claim 23 or 24, wherein the third indication is comprised in a header of a data packet sent by the fourth network function, and comprises at least one of the following:
start information of a data burst;
end information of the data burst; or
a duration of the data burst.

26. A data transmission method, performed by a second network function, comprising:
receiving, by the second network function, fifth information sent by a second device;
generating, by the second network function, second policy information based on the fifth information;
wherein the fifth information comprises at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
one or more alternative QoS parameters or parameter sets;
one or more indexes or levels corresponding to one or more alternative QoS parameters or parameter sets;
one or more alternative QoS parameters or parameter sets related to service information;
one or more indexes or levels corresponding to one or more alternative QoS parameters or parameter sets related to the service information.

27. The method according to claim 26, wherein the second policy information comprises at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
a fifth indication, used for instructing a first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

28. The method according to claim 26 or 27, further comprising:
sending, by the second network function, the second policy information to a first network function.

29. The method according to claim 26 or 27, wherein the protocol description information comprises at least one of the following:
start information of a data burst;
end information of the data burst; or
a duration of the data burst.

30. A data transmission method, performed by a first network function, comprising:
receiving, by the first network function, second policy information sent by a second network function;
sending, by the first network function, fourth information to a first device according to the second policy information and/or sending, by the first network function, sixth information to a fourth network function according to the second policy information;
wherein the second policy information comprises at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative QoS profiles or patterns;
protocol description information;
a fifth indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets;
one or more indexes or levels corresponding to one or more alternative QoS parameters or parameter sets;
one or more alternative QoS parameters or parameter sets related to service information; or
one or more indexes or levels corresponding to one or more alternative QoS parameters or parameter sets related to the service information.

31. The method according to claim 30, wherein the sixth information comprises at least one of the following:
protocol description information; or
instruction to identify and label a data burst.

32. The method according to claim 30, wherein the fourth information comprises at least one of the following:
an alternative QoS profile or pattern;
an alternative PDU set QoS profile or pattern;
a fourth indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result;
an alternative QoS parameter or parameter set; or
an alternative QoS parameter or parameter set related to the service information.

33. A data transmission method, performed by a fourth network function, comprising:
receiving, by the fourth network function, sixth information sent by a first network function; wherein the sixth information comprises at least one of the following:
protocol description information; or
instruction to identify and label a data burst.

34. The method according to claim 33, further comprising:
identifying and labeling, by the fourth network function, the data burst;
placing, by the fourth network function, at least one of the following information about the data burst in a header of a data packet: start information of the data burst, end information of the data burst, or a duration of the data burst; and
sending, by the fourth network function, the data packet to a first device through a user plane.

35. A data transmission method, performed by a second device, comprising:
sending, by the second device, fifth information to a second network function; wherein the fifth information comprises at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
one or more alternative QoS parameters or parameter sets;
one or more indexes or levels corresponding to one or more alternative QoS parameters or parameter sets;
one or more alternative QoS parameters or parameter sets related to service information; or
one or more indexes or levels corresponding to one or more alternative QoS parameters or parameter sets related to the service information.

36. The method according to claim 35, wherein the protocol description information comprises at least one of the following:
start information of a data burst;
end information of the data burst; or
a duration of the data burst.

37. The method according to claim 35, wherein the sending, by the second device, the fifth information to the second network function comprises:
sending, by the second device, the fifth information to the second network function through a third network function.

38. A data transmission method, performed by a first device, comprising:
reporting, by the first device, second information, wherein the second information comprises at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to the service information; or
an index or level corresponding to an alternative QoS parameter or parameter set related to the service information.

39. The method according to claim 38, wherein the reporting the second information comprises:
sending, by the first device, the second information to a third device through a fourth network function.

40. The method according to claim 38, further comprising the steps of the data transmission method according to any one of claims 1 to 7, or comprising the steps of the data transmission method according to any one of claims 23 to 25.

41. A data transmission method, performed by a fourth network function, comprising:
receiving, by the fourth network function, second information reported by a first device;
generating, by the fourth network function, eighth information based on the second information, and sending, by the fourth network function, the eighth information carried in a header to a third device;
wherein the second information comprises at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to the service information; or
an index or level corresponding to an alternative QoS parameter or parameter set related to the service information;
wherein the eighth information comprises at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to the service information;
an alternative QoS parameter or parameter set;
an index or level corresponding to an alternative QoS parameter or parameter set;
an alternative QoS parameter or parameter set related to the service information; or
an index or level corresponding to an alternative QoS parameter or parameter set related to the service information.

42. The method according to claim 41, wherein the sending the eighth information carried in the header to the third device comprises:
sending, by the fourth network function, the eighth information to the third device based on mapping information provided by a first network function, wherein the mapping information comprises at least one of the following:
an alternative QoS parameter or parameter set;
an index or level corresponding to an alternative QoS parameter or parameter set;
an alternative QoS parameter or parameter set related to the service information; or
an index or level corresponding to an alternative QoS parameter or parameter set related to the service information.

43. A data transmission method, performed by a third device, comprising:
receiving, by the third device, eighth information sent by a fourth network function, the eighth information comprising at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to the service information; or
an index or level corresponding to an alternative QoS parameter or parameter set related to the service information.

44. A data transmission apparatus applied to a first device, the apparatus comprising:
a first receiving module, configured to receive first information sent by a first network function;
a first execution module, configured to perform a first operation based on the first information; wherein the first operation comprises at least one of the following:
for each protocol data unit set (PDU set), adjusting or deciding on an alternative PDU set Quality of Service (QoS) profile or pattern;
for each PDU set, adjusting or deciding on one or more parameters in the alternative PDU set QoS profile or pattern;
for each QoS flow, adjusting or deciding on the alternative PDU set QoS profile or pattern;
for each QoS flow, adjusting or deciding on one or more parameters in the alternative PDU set QoS profile or pattern;
for one or more QoS flows, adjusting or deciding on an alternative QoS parameter or parameter set related to service information; or
for one or more QoS flows, adjusting or deciding on an index or level corresponding to the alternative QoS parameter or parameter set related to the service information.

45. A data transmission apparatus applied to a second network function, the apparatus comprising:
a second receiving module, configured to receive third information sent by a second device;
a first generating module, configured to generate first policy information based on the third information;
wherein the third information comprises at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
instruction to report an adjustment or decision result;
an alternative QoS parameter or parameter set related to service information;
an index or level corresponding to the alternative QoS parameter or parameter set related to the service information;
the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

46. A data transmission apparatus applied to a first network function, the apparatus comprising:
a third receiving module, configured to receive first policy information sent by a second network function;
a third sending module, configured to send first information to a first device according to the first policy information;
wherein the first policy information comprises at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
a second indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets related to the service information;
one or more indexes or levels corresponding to one or more alternative QoS parameters or parameter sets related to the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

47. A data transmission apparatus applied to a second device, the apparatus comprising:
a fourth sending module, configured to send third information to a second network function; wherein the third information comprises at least one of the following:
one or more alternative PDU set QoS profiles or patterns;
one or more indexes or levels corresponding to one or more alternative PDU set QoS profiles or patterns;
a one-to-one correspondence between alternative PDU set QoS profiles or patterns and PSIs;
a correspondence between multiple alternative PDU set QoS profiles or patterns and one PSI;
instruction to report an adjustment or decision result;
an alternative QoS parameter or parameter set related to service information;
an index or level corresponding to the alternative QoS parameter or parameter set related to the service information;
the service information;
a correspondence between the alternative QoS parameter or parameter set and the service information;
a correspondence between the alternative QoS parameter or parameter set related to the service information and the service information; or
a correspondence between an index or level corresponding to the alternative QoS parameter or parameter set related to the service information and the service information.

48. A data transmission apparatus applied to a fourth network function, the apparatus comprising:
an eleventh receiving module, configured to receive seventh information sent by a first network function;
a processing module, configured to identify, classify and/or map a service flow based on the seventh information;
wherein the seventh information comprises at least one of the following:
service information;
a mapping relationship between the service information and a QoS flow; or
a mapping relationship between the service information and a priority of the QoS flow.

49. A data transmission apparatus applied to a first device, the apparatus comprising:
a fourth receiving module, configured to receive fourth information sent by a first network function;
a fifth receiving module, configured to receive a third indication sent by a fourth network function;
a second execution module, configured to perform a second operation based on the fourth information and the third indication; wherein the second operation comprises at least one of the following:
for each QoS flow, adjusting or deciding on one or more parameters in an alternative QoS profile or pattern;
for each QoS flow, adjusting or deciding on one or more parameters in an alternative PDU set QoS profile or pattern;
for each PDU set, adjusting or deciding on one or more parameters in the alternative PDU set QoS profile or pattern;
reporting an index or level corresponding to an adjusted QoS profile or pattern;
reporting an index or level corresponding to an adjusted PDU set QoS profile or pattern;
reporting adjustment or decision result information;
for one or more QoS flows, adjusting or deciding on an alternative QoS parameter or parameter set; or
for one or more QoS flows, adjusting or deciding on an alternative QoS parameter or parameter set related to service information.

50. A data transmission apparatus applied to a second network function, the apparatus comprising:
a sixth receiving module, configured to receive fifth information sent by a second device;
a second generating module, configured to generate second policy information based on the fifth information;
wherein the fifth information comprises at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
one or more alternative QoS parameters or parameter sets;
one or more indexes or levels corresponding to one or more alternative QoS parameters or parameter sets;
one or more alternative QoS parameters or parameter sets related to service information; or
one or more indexes or levels corresponding to one or more alternative QoS parameters or parameter sets related to the service information.

51. A data transmission apparatus applied to a first network function, the apparatus comprising:
a seventh receiving module, configured to receive second policy information sent by a second network function;
a sixth sending module, configured to send fourth information to a first device according to the second policy information and/or send sixth information to a fourth network function according to the second policy information;
wherein the second policy information comprises at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative QoS profiles or patterns;
protocol description information;
a fifth indication, used for instructing the first device to adjust or decide on at least one of the following: PDU set QoS profile or pattern, alternative QoS profile or pattern, or one or more parameters in the alternative PDU set QoS profile or pattern;
instruction to report an adjustment or decision result;
one or more alternative QoS parameters or parameter sets;
one or more indexes or levels corresponding to one or more alternative QoS parameters or parameter sets;
one or more alternative QoS parameters or parameter sets related to service information; or
one or more indexes or levels corresponding to one or more alternative QoS parameters or parameter sets related to the service information.

52. A data transmission apparatus applied to a fourth network function, the apparatus comprising:
an eighth receiving module, configured to receive sixth information sent by a first network function; wherein the sixth information comprises at least one of the following:
protocol description information; or
instruction to identify and label a data burst.

53. A data transmission apparatus applied to a second device, the apparatus comprising:
a seventh sending module, configured to send fifth information to a second network function; wherein the fifth information comprises at least one of the following:
one or more alternative QoS profiles or patterns;
one or more indexes or levels corresponding to one or more alternative QoS profiles or patterns;
one or more alternative PDU set QoS profiles or patterns;
one or more indexes or levels corresponding to one or more alternative PDU set QoS profiles or patterns;
protocol description information;
one or more alternative QoS parameters or parameter sets;
one or more indexes or levels corresponding to one or more alternative QoS parameters or parameter sets;
one or more alternative QoS parameters or parameter sets related to the service information; or
one or more indexes or levels corresponding to one or more alternative QoS parameters or parameter sets related to the service information.

54. A data transmission apparatus applied to a first device, the apparatus comprising:
a second reporting module, configured to report second information, wherein the second information comprises at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to service information; or
an index or level corresponding to an alternative QoS parameter or parameter set related to the service information.

55. A data transmission apparatus applied to a fourth network function, the apparatus comprising:
a ninth receiving module, configured to receive second information reported by a first device;
an eighth sending module, configured to generate eighth information based on the second information and send the eighth information carried in a header to a third device;
wherein the second information comprises at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to the service information; or
an index or level corresponding to an alternative QoS parameter or parameter set related to the service information;
wherein the eighth information comprises at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to the service information;
an alternative QoS parameter or parameter set;
an index or level corresponding to an alternative QoS parameter or parameter set;
an alternative QoS parameter or parameter set related to the service information; or
an index or level corresponding to an alternative QoS parameter or parameter set related to the service information.

56. A data transmission apparatus applied to a third device, the apparatus comprising:
a tenth receiving module, configured to receive eighth information sent by a fourth network function, wherein the eighth information comprises at least one of the following:
a parameter in a QoS profile or pattern;
a parameter in a PDU set QoS profile or pattern;
an index or level corresponding to an alternative QoS profile or pattern;
an index or level corresponding to an alternative PDU set QoS profile or pattern;
QoS parameters or parameter sets related to service information;
an alternative QoS parameter or parameter set;
an index or level corresponding to an alternative QoS parameter or parameter set;
an alternative QoS parameter or parameter set related to the service information; or
an index or level corresponding to an alternative QoS parameter or parameter set related to the service information.

57. A communication device comprising a processor, a memory, and a program or instructions stored in the memory and executable on the processor, wherein the program or instructions, when executed by the processor, implement the steps of the data transmission method according to any one of claims 1 to 43.

58. A readable storage medium storing a program or instructions, wherein the program or instructions, when executed by a processor, implement the steps of the data transmission method according to any one of claims 1 to 43.
